(19) Europäisches Patentamt / European Patent Office / Office européen des brevets

(11) **EP 4 036 810 A1**

(12) **EUROPEAN PATENT APPLICATION**
published in accordance with Art. 153(4) EPC

(43) Date of publication:
**03.08.2022 Bulletin 2022/31**

(21) Application number: **20869294.7**

(22) Date of filing: **22.09.2020**

(51) International Patent Classification (IPC):
*G06N 3/063* (2006.01)

(52) Cooperative Patent Classification (CPC):
**G06N 3/063**

(86) International application number:
**PCT/CN2020/116933**

(87) International publication number:
**WO 2021/057746 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2019 CN 201910910117
24.09.2019 CN 201910910118**

(71) Applicant: **Anhui Cambricon Information
Technology Co., Ltd.
Hefei, Anhui 231283 (CN)**

(72) Inventors:
• **ZHANG, Xiao**
**Hefei, Anhui 231283 (CN)**
• **ZHOU, Yusong**
**Hefei, Anhui 231283 (CN)**
• **MENG, Xiaofu**
**Hefei, Anhui 231283 (CN)**

(74) Representative: **Huang, Liwei
Cäcilienstraße 12
40597 Düsseldorf (DE)**

(54) **NEURAL NETWORK PROCESSING METHOD AND APPARATUS, COMPUTER DEVICE AND STORAGE MEDIUM**

(57) Embodiments of the present disclosure provide a neural network processing method, a neural network processing apparatus, a computer device and a storage medium. By splitting an operator into a plurality of operators with smaller scales, a calculation library under a single-core structure may be directly invoked by a multi-core processor, which makes full use of hardware resources of the multi-core processor.

FIG. 4

EP 4 036 810 A1

## Description

### TECHNICAL FIELD

The present disclosure relates to the technical field of information processing and specifically relates to a neural network processing method, a neural network processing apparatus, a computer device, and a storage medium.

### BACKGROUND

With the rapid development of artificial intelligence technology, a multi-core processor based on a memory-sharing model has become a mainstream structure of current processors. This multi-core structure and vector processing capabilities of each core may also be applied to neural network calculations. In practical applications, data parallelism may be generally used to make full use of extra hardware resources brought by a multi-core processor structure. In other words, each processor core may perform calculations of different pieces of data on a same neural network model separately at the same time. However, this parallel method may not be used by the multi-core processor structure to process neural network calculation tasks that have small batches of data and require low delay in reasoning scenarios. Then, how to ensure the unification of data parallelism and neural network model parallelism to make full use of hardware resources of the multi-core processor is a technical problem required to be solved urgently.

### SUMMARY

Embodiments of the present disclosure provide a neural network processing method, a neural network processing apparatus, a computer device and a storage medium. By splitting a neural network calculation task into several sub-calculation tasks with smaller scales, a calculation library under a single-core structure may be invoked directly by a multi-core processor, thereby making full use of hardware resources of the multi-core processor and avoiding extra workloads brought by reimplementation.

A first aspect of the embodiments of the present disclosure provides a neural network processing method applied to an artificial intelligence processor. The artificial intelligence processor may include M artificial intelligence processor cores, where M is a positive integer greater than 1. The method includes:

obtaining a calculation graph corresponding to a neural network model, where the neural network model includes a plurality of operators;
determining a target splitting policy of a neural network calculation task in a splitting policy set, where the splitting policy set is a set composed of splitting policies corresponding to target operators in the calculation graph;
splitting the neural network calculation task according to the target splitting policy to obtain a plurality of sub-calculation tasks; and
distributing the plurality of sub-calculation tasks to corresponding artificial intelligence processor cores in the artificial intelligence processor for processing.

A second aspect of the embodiments of the present disclosure provides a neural network processing apparatus including units configured to perform the method of the first aspect above. Specifically, the apparatus may be applied to an artificial intelligence processor. The artificial intelligence processor may include M artificial intelligence processor cores, where M is a positive integer greater than 1. The apparatus includes:

a first obtaining unit configured to obtain a calculation graph corresponding to a neural network model, where the neural network model may include a plurality of operators;
a first determining unit configured to determine a target splitting policy of a neural network calculation task in a splitting policy set, where the splitting policy set is a set composed of splitting policies corresponding to target operators in the calculation graph;
a splitting unit configured to split the neural network calculation task according to the target splitting policy to obtain a plurality of sub-calculation tasks; and
an executing unit configured to distribute the plurality of sub-calculation tasks to corresponding artificial intelligence processor cores in the artificial intelligence processor for processing.

A third aspect of the embodiments of the present disclosure provides a chip including the neural network model processing apparatus of the second aspect above.

A fourth aspect of the embodiments of the present disclosure provides a computer device including the chip of the third aspect above or the neural network model processing apparatus of the second aspect above.

A fifth aspect of the embodiments of the present disclosure provides a computer device including processors and a memory that are connected to each other. The processors may include a general-purpose processor and an artificial intelligence processor. The memory may be configured to store a computer program that supports the computer device to perform the method above. The computer program may include a program instruction. The processors may be configured to invoke the program instruction to perform the method of the first aspect above.

A sixth aspect of the embodiments of the present disclosure provides a computer readable storage medium, on which a computer program is stored. The computer program may include a program instruction, and the program instruction may enable a processor to implement the method of the first aspect above when executed by the processor.

A seventh aspect of the present disclosure provides a computer program product including a non-transitory computer-readable storage medium that stores a computer program. The computer program may be executed to enable a computer to perform some or all of steps of the method of the first aspect of the embodiments of the present disclosure. The computer program product may be a software installation package.

In embodiments of the present disclosure, by splitting a neural network calculation task into several sub-calculation tasks with smaller scales, a calculation library under a single-core structure may be invoked directly by a multi-core processor, thereby making full use of hardware resources of the multi-core processor and avoiding extra workloads brought by reimplementation.

## BRIEF DESCRIPTION OF THE DRAWINGS

In order to illustrate technical solutions in embodiments of the present disclosure more clearly, drawings to be used in the description of the embodiments are briefly explained hereinafter. Obviously, the drawings in the description hereinafter are some embodiments of the present disclosure. Other drawings may be obtained according to the disclosed drawings without any creative effort by those skilled in the art.

FIG. 1A is a schematic structural diagram of a multi-core processor according to an embodiment of the present disclosure.

FIG. 1B is a schematic diagram of semantics of a reshape operator according to an embodiment of the present disclosure.

FIG. 1C is a schematic diagram of semantics of a transpose operator according to an embodiment of the present disclosure.

FIG. 1D is a schematic diagram of semantics of a concat operator according to an embodiment of the present disclosure.

FIG. 1E is a schematic diagram of semantics of a split operator according to an embodiment of the present disclosure.

FIG. IF is a schematic diagram of a continuous storage of tensor data according to an embodiment of the present disclosure.

FIG. 1G is a schematic diagram of guaranteeing equivalence of operations according to an embodiment of the present disclosure.

FIG. 1H is a schematic diagram of a memory distribution with strides according to an embodiment of the present disclosure.

FIG. 1I is a schematic structural diagram of a software stack for an artificial intelligence processor according to an embodiment of the present disclosure.

FIG. 2 is a schematic structural diagram of a computer device according to an embodiment of the present disclosure.

FIG. 3A is a flowchart of a neural network processing method according to an embodiment of the present disclosure.

FIG. 3B is a schematic structural diagram of a neural network model for face recognition according to an embodiment of the present disclosure.

FIG. 3C is a schematic structural diagram of a neural network model for license plate character recognition according to an embodiment of the present disclosure.

FIG. 4 is a calculation graph of a neural network convolutional operator according to an embodiment of the present disclosure.

FIG. 5A is a schematic diagram of splitting according to a N dimension of input data.

FIG. 5B is a schematic diagram of splitting according to a C dimension of output data.

FIG. 5C is a schematic diagram of splitting according to a C dimension of input data.

FIG. 5D is a schematic diagram of splitting according to a H dimension of input data.

FIG. 5E is a schematic diagram of splitting according to a W dimension of input data.

FIG. 6A is a flowchart of a neural network optimization method according to an example of the present disclosure.

FIG. 6B is a schematic structural diagram of a glue operator extracted from an original calculation graph according to an embodiment of the present disclosure.

FIGs. 7A-7P are optimization diagrams of a neural network model according to embodiments of the present disclosure.

FIG. 8A is a schematic structural diagram of a first calculation graph according to an embodiment of the present disclosure.

FIG. 8B is a schematic structural diagram of a glue subgraph according to an embodiment of the present disclosure.

FIG. 8C is a schematic structural diagram of an optimized equivalent optimization sequence according to an embodiment of the present disclosure.

FIG. 8D is a schematic structural diagram of an extended first calculation graph according to an embodiment of the present disclosure.

FIG. 8E is a state set graph according to an embodiment of the present disclosure.

FIGs. 8F-8M are state transformation graphs according to embodiments of the present disclosure.

FIG. 9 is a schematic structural diagram of a neural network processing apparatus according to an embodiment of the present disclosure.

FIG. 10 is a schematic structural diagram of a neural network optimization apparatus according to an embodiment of the present disclosure.

## DETAILED DESCRIPTION OF THE EMBODIMENTS

Technical solutions in embodiments of the present disclosure will be described hereinafter with reference to drawings.

It should be understood that terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely intended to describe a specific embodiment rather than to limit the present disclosure. As being used in the specification and the claims of the disclosure, unless the context clearly indicates otherwise, singular forms such as "a", "an", and "the" are intended to include plural forms. It should also be understood that a term "and/or" used in the specification and the claims refers to any and all possible combinations of one or more of relevant listed items and includes these combinations.

As being used in this specification and the claims, the term "if' may be interpreted as "when", or "once" or "in response to a determination" or "in response to a case where something is detected" depending on the context. Similarly, depending on the context, the clause "if it is determined that" or "if [a described condition or event] is detected" may be interpreted as "once it is determined that", or "in response to a determination", or "once [a described condition or event] is detected", or "in response to a case where [a described condition or event] is detected".

In order to better understand the technical solutions of the present disclosure, technical terms involved in embodiments of the present disclosure are explained first hereinafter.

(1) Data parallelism

Specifically, data parallelism refers to dividing data into several blocks to be mapped to different processors, where each processor executes a same processing program to process data that is distributed. In the prior art, most of parallel processing adopts this processing method, especially for problems with high computational complexity, such as hydromechanics calculation, image processing, and the like.

In an embodiment of the present disclosure, the data parallelism may be applied to large-scale neural network parallel trainings. Specifically, a core of data parallelism is to use a plurality of processors to train a same neural network model simultaneously. In each iteration of training, each processor may obtain data to be used in this iteration from a dataset and complete a round of reasoning and training of the entire network and may return gradient data obtained in this iteration to update a model. After receiving gradients of all processors, a server for maintaining weights may use these gradients to update data of the model. Clearly, since the plurality of processors may perform training tasks in parallel, which means that a larger batch of data may be processed in each iteration, time required by a system to complete these training tasks may be reduced. Therefore, a key of data parallelism lies in a batch size of the data to be processed in each iteration; in other words, if a batch of the data to be processed is larger, the data is divided into more processors for processing in parallel.

(2) Model parallelism

In an embodiment of the present disclosure, model parallelism is another neural network parallel calculation mode in addition to data parallelism. In other words, the model parallelism refers to distributing calculation loads to different processors by dividing neural network model parameters.

The biggest difference between the model parallelism and the data parallelism is that a degree of model parallelism is statically determined at compile time and may not be changed once compilation is completed, which is called an inherent property of a model, while the data parallelism is dynamically specified at runtime, and a same model may specify different degrees of data parallelism. Additionally, limited by the computing core number of hardware and a double data rate (DDR) memory access bandwidth of hardware, application scenarios and positioning of two parallel technologies on the artificial intelligence processor are slightly different: data parallel programming tends to obtain an ultimate throughput rate, while model parallel programming is inclined to obtain an ultimate low delay.

(3) Multi-core processor

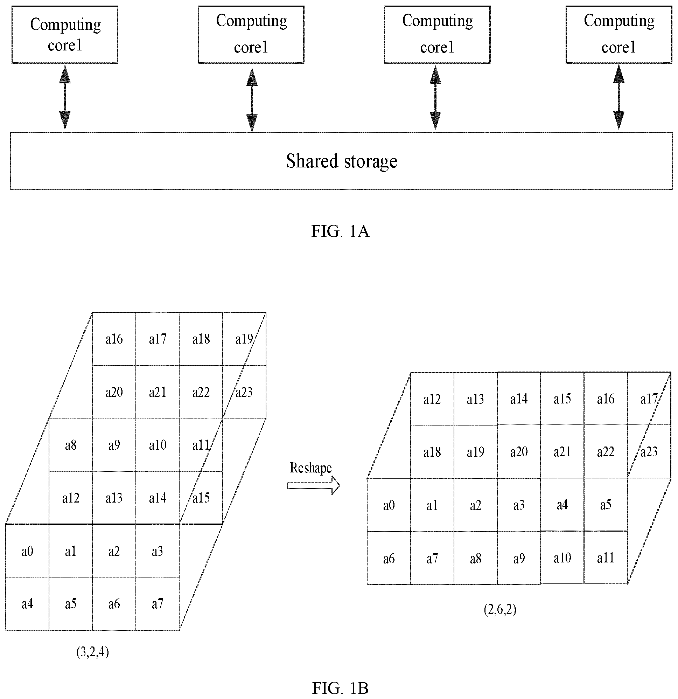

The most common structure currently used in multi-core processors is a multi-core structure based on a shared memory. As shown in FIG.1A, a processor may include a plurality of computing cores, and each computing core may include an independent caching unit, a register file, a computing unit and an instruction control unit, and all computing cores may share a same global memory.

In the prior art, a single core is sufficient for any calculation task with complex logic, but performance of the single core is limited by Moore's Law and chip technologies. In order to further improve performance of the processor, the plurality of computing cores are introduced into the processor. The plurality of computing cores may be used to process calculation tasks with a high degree of parallelism.

In practical applications, the multi-core structure based on the shared memory is a classical multi-core structure and is very suitable for a neural network training method that adopts data parallelism. Each core may be used as one processor in the data parallelism to read different pieces of data respectively and complete forward and backward calculations of a network model in parallel. Each core may maintain its good performance power ratio under a previous single-core structure in a calculation phrase, and at the same time, throughput of an entire system may also be increased with an expansion of the number of cores.

(4) Operator splitting

In an embodiment of the present disclosure, operator splitting may be used to implement a division of calculation tasks to realize model parallelism; in other words, a single operator may be split to several sub-operators that may be executed in parallel. It needs to be noted that here both an original operator before splitting and the several sub-operators after the splitting are operators supported by the artificial intelligence processor and original tensor data is divided into several pieces of new sub-tensor data with the operator splitting. Corresponding to a calculation graph, an original calculation graph containing a single operator may be divided into a calculation graph containing more operators that may be executed in parallel.Through this implementation, a task division within the operator similar to the model parallelism may be realized, and at the same time, it is ensured that each sub-operator after the splitting may reuse an instruction implementation of the operator under the single-core structure for calculations, which may avoid reconstruction of the instruction implementation of an original operator.

In an embodiment of the present disclosure, the operator splitting is not only limited to the splitting of model parameters, but also the splitting of data by using a method of data parallelism, which actually blurs the boundary between the model parallelism and the data parallelism. Taking a convolutional operator as an example, if taking input data and a weight value of the convolutional operator as equivalent low-level tensor data in the calculation graph, a division of calculations is based on the splitting of input data if the data parallelism is performed, while the division of calculations is based on the splitting of the weight value if the model parallelism is performed. Both the two parallelism divides calculation loads by splitting the tensor data associated with the convolutional operator. From this perspective, the data parallelism and the model parallelism are unified.

(5) Tensor

In this technical solution of the present disclosure, a tensor is only a feature description of a piece of data stored and the tensor records information such as the shape and type of the data.

In an embodiment of the present disclosure, the tensor should be understood as the tensor data including input tensor data and output tensor data in the neural network model, as well as feature tensor data.

Taking an artificial intelligence deep learning framework TensorFlow as an example, terms such as rank, shape and dimension number are generally used to describe dimensions of the tensor, and relationships may be represented by the following Table 1.

Table 1

| Rank | Shape | Dimension number | Example |
|---|---|---|---|
| 0 | [] | 0-D | 4 |
| 1 | [D1] | 1-D | [2] |
| 2 | [D1,D2] | 2-D | [6,2] |
| 3 | [D1,D2,D3] | 3-D | [7,3,2] |
| n | [D1,D2,D3,...,Dn] | n-D | Tensor with the shape of [D1,D2,D3,...,Dn] |

As shown in Table 1, tensor A=4, which represents a number. Tensor A=[6, 2], which represents a two-dimensional matrix. Specifically, the matrix is a matrix with 6 rows and 2 columns.

(6) Operator splitting

In the prior art, algorithm designers use an operator as a basic unit, supplemented by tensor data associated with the operator, to build a calculation graph of a neural network algorithm. In an embodiment of the present disclosure, according to semantics of operators, the operators in present deep learning may be divided into two types. The detailed description will be presented in the following.

Operators of a first type are responsible for obtaining output features from input features. They have their own specific calculation tasks and perform multiplication, addition, non-linear calculation, comparison selection and other mathematical operations on input data. For example, convolutional operators perform convolution calculations on a partial area of an input feature map by using convolution kernels and perform linear calculations on data in the input feature map to obtain the output features; for another example, fully-connected operators perform linear combinations on all input features by using matrix multiplications; for another example, pooling operators sample the input data to obtain output data.

The semantics of another type of operators does not involve any calculation logic. The input data and output data of another type of operators may not have any change regardless of the number of values or the values themselves. This type of operators is usually used to adjust the format and shape of the tensor data in the calculation graph of the neural network model and the distribution of the tensor data in memory, so as to adjust the tensor data calculated from the upstream of the neural network model into a better and convenient form for the downstream calculation. In this process, this type of operators plays a role in "gluing" the upper and lower calculation parts of the neural network model. Specifically, this type of operators is called "glue" operators. Then, accordingly, the part of the calculation graph composed of the "glue" operators is called a "glue" subgraph.

(7) "Glue" operator

In an embodiment of the present disclosure, "glue" operator has four types, including a reshape operator, a transpose operator, a concat operator, and a split operator. The detailed description will be presented in the following one by one.

A. Reshape operator

In an embodiment of the present disclosure, the reshape operator is also called a tensor reshape operator, which is used to redefine the shape of the tensor. In practical applications, the reshape operator may be used to adjust the shape of the tensor data. Specifically, the reshape operator may be expressed as tf. reshape (tensor, shape, name=None) and be used to transform the tensor into the form of a parameter shape.

In one case, the parameter shape is equal to [-1], which represents expanding the tensor into a list.

In one case, the parameter shape is equal to [a, b, c, ..., n], where a, b, c, ..., n represent positive integers greater than 0, which represents transforming the tensor into a multidimensional matrix. In one case, the parameter shape is equal to [a, -1, c, ..., n], where b=-1, a, c, ..., n represent positive integers greater than 0, which represents that tf automatically calculates the value of b according to the original size of the tensor.

For example, when the tensor A is equal to [3, 2, 4], after performing a reshape 1 operator operation on the tensor A, the tensor B may be obtained, where the tensor B is equal to [2, 6, 2]. Specifically, the detail may be provided with reference to the schematic diagram of semantics of the reshape operator shown in FIG. 1B.

B. Transpose operator

In an embodiment of the present disclosure, the transpose operator is also called a tensor transpose operator, which is used to transposing the tensor. In practical applications, the transpose operator may be used to adjust the dimension sequence of the tensor data. Specifically, the transpose operator may be expressed as tf. transpose (a, perm=None, name='transpose') and used to transpose the sequence of the tensor according to a perm parameter . Here, the perm parameter is a total permutation of natural number sequence [1, 2, 3, ..., n], and different total permutations represent different transpose operators.

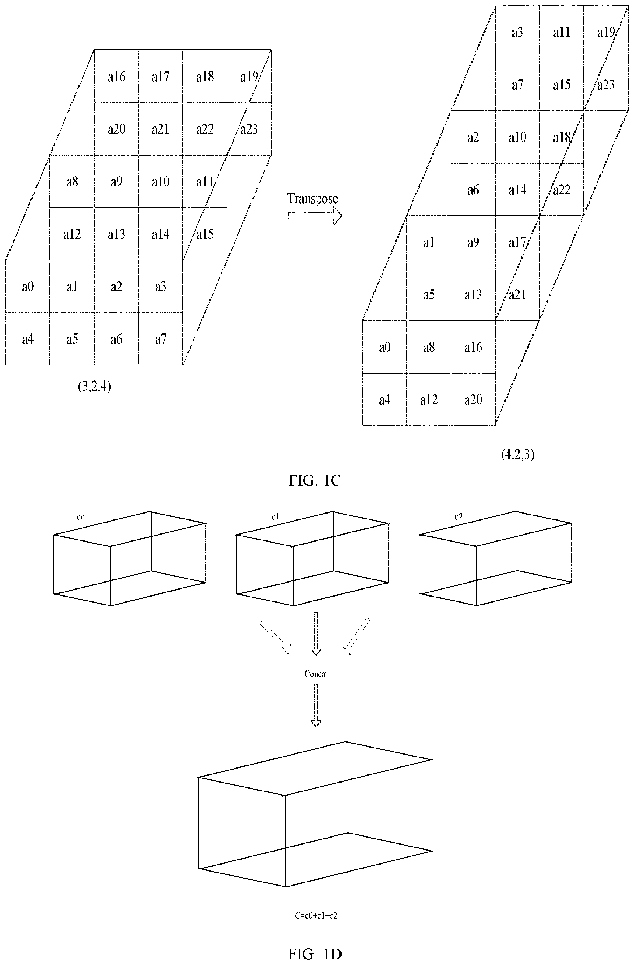

Generally, a multidimensional tensor may have a plurality of dimensions and there is a sequence between them. The transpose operator may be used to change the sequence among dimensions. Additionally, it should be noted that in some scenarios, the transpose operator is also called a permute operator. For example, when the tensor A is equal to [3, 2, 4], after performing a transpose operator operation on the tensor A, the tensor B may be obtained, where the tensor B is equal to [4, 2, 3]. Specifically, the detail may be provided with reference to the schematic diagram of semantics of the transpose operator shown in FIG. 1C.

C. Concat operator

In an embodiment of the present disclosure, the concat operator is also called a concatenation operator, which is used to concatenate a plurality of tensor data into the tensor along a specified dimension. In addition to the specified dimension, other dimensions of input tensor also should be consistent. Through the concat operator, the neural network may concatenate a plurality of tensors representing features from different upstream locations into one tensor, so that these features may be processed together in downstream calculations. Specifically, the detail may be provided with reference to the schematic diagram of semantics of the concat operator shown in FIG. 1D.

D. Split operator

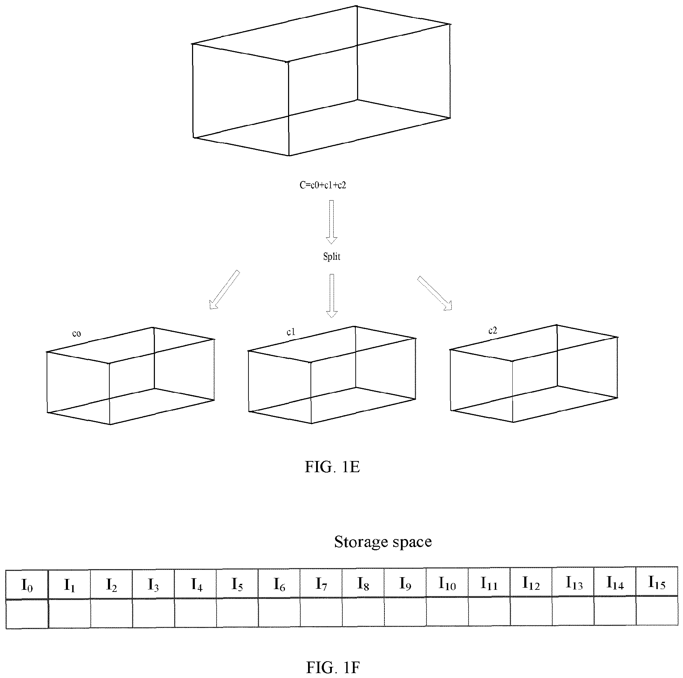

In an embodiment of the present disclosure, the split operator is also called a splitting operator, which is used to split the tensor into a plurality of tensors in a specified dimension. In addition to the specified dimension, the plurality of tensors after the splitting are consistent in other dimensions. Through the split operator, features belonging to the same tensor data may be split into a plurality of copies, so that they may be processed separately in subsequent calculations. Specifically, the detail may be provided with reference to the schematic diagram of semantics of the split operator shown in FIG. 1E.

In general, in an embodiment of the present disclosure, the glue operator is used to adjust at least one of the format of the tensor data in the neural network model, the shape of the tensor data in the neural network model, and the distribution of the tensor data in the memory.

It should be noted that in an embodiment of the present disclosure, the glue operator may include, but is not limited to, the aforementioned four different types of operators, and may also include other operators, which are not specifically limited in the embodiment of the present disclosure.

(8) Data distribution of tensor data in memory

In the calculations of the neural network, the multidimensional tensor is used as a basic unit of data transfer between operators. Generally, the data is stored in memory in a continuous manner. For example, as shown in FIG. 1F, the data is stored in 16 consecutive bits between 10-115.

In an embodiment of the present disclosure, the sequence of storing the data is same with the sequence of the tensor expanding all the dimensions at once from the outside to the inside to the elements in one-dimensional data. Accessing the data in the tensor is determined according to the coordinates of the elements in different dimensions and the dimensions themselves. For example, for the tensor with a shape of (D0, D1, D2) and stored in a continuous memory with a size of $D0 \times D1 \times D2$, accessing the data of the coordinates (n0, n1, n2) in the tensor may be based on the starting address of the data in the memory and the calculated data offset $(n0 \times D1 + n1) \times D2 + n2$ to determine the address of the data in the memory.

It may be understood that it is very intuitive and convenient to use this tightly continuous storage method to store multi-dimensional tensor data, and the conversion of element coordinates and their offsets in the memory is also very simple. In the prior art, for example, deep learning frameworks, such as a convolutional architecture for fast feature embedding (Caffe) and MXNet, use this method to manage the memory of the tensor data in the neural network model, and based on this, kernel functions of various operators such as convolutional operators and pooling operators on general purpose processors and artificial intelligence professors (for example, a graphics processing unit (GPU)) may be implemented. However, in terms of performance, this kind of memory distribution is far away from an optimal one.

In order to meet requirements of hardware design and performance improvement, hardware manufacturers have designed different data distributions in the memory. These distinctive distributions are a main reason for a performance waste of the "glue" subgraph in neural network processing.

(9) Dimension sequence

Taking a convolutional neural network as an example (specifically, the convolutional neural network is used for image classification or object detection), the tensor data in the calculation graph of the neural network model generally have four dimensions, including N representing a batch size of data processed by a current calculation, C representing the number of feature maps, and H and W representing a size of feature maps.

In an embodiment of the present disclosure, dimension sequence of the tensor data may be NCHW; in other words, N is the outermost dimension in the process of calculating offsets, and W is the innermost dimension. For example, the tensor data in the Caffe uses this dimension sequence by default; both MXNet and TensorFlow support this dimension sequence. The offset of the element with coordinates of (n, c, h, w) in the memory is $((n \times C+c) \times H+h) \times W+w$.

In an embodiment of the present disclosure, the dimension sequence of the tensor data may also be NHWC (here, C is the innermost dimension), and the corresponding conversion method of the coordinates and the offsets is $((n \times H+h) \times W+w) \times C+c$. In practical applications, compared with NCHW, NHWC is more close to the image data storage format of a Bitmap (BMP). For files in BMP format, the data is stored according to pixels, and each pixel stores color values for all channels, which eliminates the need for additional dimensional conversions when reading input images. Additionally, based on the most direct calculation logic of the most common convolutional operator in the neural network model, the C dimension is easier to use vector calculation instructions for parallelization than the H and W dimensions. For example, when the convolution kernel is $1 \times 1$, only one group of data along the C dimension is required to calculate a value in the output tensor, which makes it possible to place the C dimension on the innermost dimension to make better use of the locality of the data and directly use a highly optimized matrix multiplication to replace the $1 \times 1$ convolution calculation.

In an embodiment of the present disclosure, the dimension sequence of the tensor data may also be CHWN (here, N is the innermost dimension), and the corresponding conversion method of the coordinates and the offsets is $((c \times H+h) \times W+w) \times N+n$. For example, a neon developed by Nervana uses the tensor of this dimension sequence for convolution kernel pooling calculations. Clearly, with the right batch size, placing the N dimension on the innermost side is the most intuitive way for parallelization. This idea is consistent with that of data parallelism in distributed trainings.

For the artificial intelligence processor, in order to maximize performance gains, the most appropriate dimension sequence may be selected to store the tensor data in combination with its own micro-structure design.

In practical applications, algorithm designers tend to assume that original tensor data is sorted in the memory with the dimension sequence of NCHW. For example, an operator sequence composed of transpose operators and reshape operators implements a conversion of $(N,C,H,W) \rightarrow (N,H,W,C) \rightarrow (N,C \times W,1,1)$, which intends to merge data on the C, H, and W dimensions into one dimension, and to ensure that an original C dimension may be at the innermost of the merged dimension.

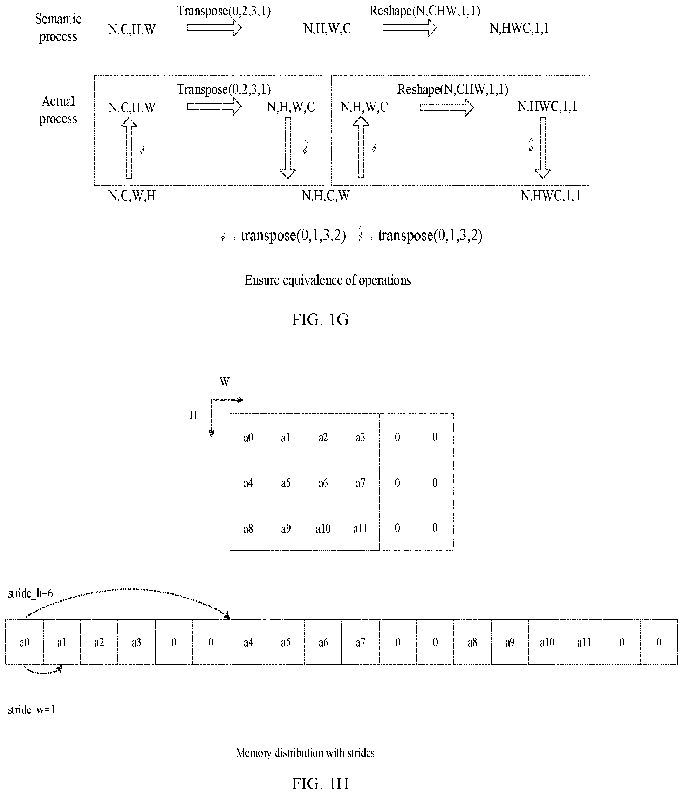

In an embodiment of the present disclosure, for the artificial intelligence processor that adopts the dimension sequence other than NCHW to store the tensor data, a difference in dimensions may not cause errors in the calculation results, but may affect performance. When the artificial intelligence processor adopts different dimensions, as long as it is ensured that each operator achieves an equivalence to the abstract semantic meaning in the actual dimensional sequence during the execution process, the correctness of the final result may be guaranteed. For example, as shown in FIG. 1G, the tensor data in the memory actually adopt the data distribution of NCWH, and the definition of the neural network model is based on NCHW. In this case, in order to ensure the equivalence of each operation, each operator in an actual execution process should be converted to the dimension sequence assumed in the definition stage through $\varphi$ based on the input data to complete the operation of the specified operator first, and then perform the inverse conversion of $\varphi$ to obtain the correct output tensor distribution corresponding to the actual dimension sequence NCWH. Since the assumed sequence is NCHW and the distribution sequence of the tensor data in actual use is NCWH, both $\varphi$ and $\hat{\varphi}$ are transpose operations with a parameter (0, 1, 3, 2). In a specific implementation, the transpose operator may merge a plurality of internal transpose processes, but the reshape operator has an extra transpose process in the implementation. This situation is impossible for the algorithm designers to think of at the beginning of algorithm design, but it is necessary to ensure the consistency of implementation and abstract semantics. Therefore, in the case that the algorithm designers lack an understanding of underlying dimension sequence, copying an original calculation graph structure on the artificial intelligence processor may affect performance.

(10) Stride

As mentioned earlier, the tensor data is generally stored in the memory in a continuous and close manner, but the artificial intelligence processor may store the data in a discontinuous manner.

In an embodiment of the present disclosure, a discontinuous manner method refers to: the mathematical dimension of half-length of the tensor data is much smaller than the size of the actual dimension used to calculate the offset in the memory, where the actual dimension used to calculate the offset is called a stride. For example, as shown in FIG.1H, a W dimension in a two-dimensional tensor, which is also the inner dimension itself, is 4, but the actual memory is arranged according to 6. Correspondingly, when data in the same H dimension is read across the W dimension, instead of 4 values, 6 values are required to be skipped. Generally, stride_n, stride_c, stride_h and stride_w are used to respectively represent offsets that are required to be skipped to read a next value along four dimensions of N, C, H, and W. For coordinates (n, c, h, w) of a given element in the tensor, offset of the given element in the memory based on a starting address is $n \times$ stride_n+$c \times$ stride_c+$h \times$ stride_h+$w \times$ stride_w. Various distributions such as NCHW, NHWC and CHWN of the tensor in the continuous and close distribution manner may be regarded as special forms of stride. For example, a continuous distribution of NCHW may be regarded as stride_n=$c \times H \times W$, stride_c=$H \times W$, stride_h=W, stride_w=1 based on the distribution of stride.

For the artificial intelligence processor, the stride is often used in data distribution due to data alignment and memory access bit width considerations. There may be some problems of alignment and rounding in applying vector computations to the neural network model. For example, when hardware performs parallel calculations on convolutions along a C dimension, vector computation instructions and long-bit-width registers allow the multiplication and addition of 64 floating-point numbers at one time, and accordingly, data with a width of C dimension of 64 may be read from the memory at one time for calculations. However, there always exist tensor data and tensor operators that are not integer multiples of 64 in the C dimension in the neural network model. In order to deal with the last remaining part, it is necessary to implement memory access and calculation instructions separately, which makes the design of the instructions very cumbersome. Further, there exists a limitation on the memory access and alignment in storage units themselves; in other words, the starting address of each memory access must be a multiple of a certain constant, which further increases the difficulty of instruction implementation. To avoid this, an easier method is to align the dimension of the tensor data directly up to the nearest integer multiple and fill the supplemented part with 0. For most operators including convolutional operators, pooling operators and fully-connected operators, the filled 0 has no effect on a final calculation result even if the filled 0 participates in the calculation. By filling 0, the stride of a corresponding dimension becomes an integer multiple of the calculation and memory access bit width, which avoids the trouble of processing the data in the last remaining part separately.

In practical applications, for continuously-stored tensor data, a reshape is an operation without overhead; in other words, only the shape of the data is required to be modified. However, when a dimension involving the alignment of stride is involved in the dimensions involved, the overhead introduced by the reshape operator may not be ignored. For example, assuming that two dimensions of the tensor in FIG. 1G are merged into one dimension, storage locations of most elements are required to be readjusted, so as to eliminate the last two 0 of the W dimension.

(11) Blocking

Specifically, vector registers and single instruction multiple data (SIMD) may perform parallel calculations on convolutions along a certain dimension (usually it is the C dimension), but the data bit width of each operation is limited. In order to ensure that an intermediate result within the registers may fully utilized as much as possible, the input tensor may further split the C dimension, and specifically the input tensor may split the C dimension into several blocks according to the data bit width that may be processed by general purpose processors and continuously store these segments in the memory to improve cache utilization. Assuming that the SIMD instructions of the artificial intelligence processor may complete calculations on 8 floating points at one time, the distributions of N, C, H and W may be adjusted as N, C/8, H, W, 8 through the blocking. The idea of blocking may also be applied to the calculation optimization of some artificial intelligence processors. The difference between the SIMD and the blocking is that the blocking may process vector data with a larger bit width at one time, and the blocking method may also ensure the continuousness of memory access in the calculation phrase, which is conducive to improving the efficiency of memory access.

In practical applications, for the artificial intelligence processor that adopts the blocking data distribution, data distribution adjustments involving blocking dimensions need to consider the impact of blocking. Compared with the dimension sequence and stride mentioned earlier, there are fewer methods of performance improvement for the blocking distribution, but in some special cases, different neural network calculation graph structures still have a certain impact on performance.

In general, there are various reasons for the artificial intelligence processor to select the storage data distribution method that meets its own characteristics, but it is difficult for the algorithm designers to know the details hidden in the bottom layer. Therefore, copying the original calculation graph structure on the artificial intelligence processor may cause the waste of performance, and adjusting the "glue" subgraph (the "glue" subgraph is composed of "glue" operators) structure in a rational manner may avoid a lot of unnecessary memory access overhead and optimize the execution performance of the entire neural network model.

The following embodiments of the present disclosure provide a detailed description of the "glue" subgraph including a plurality of glue operators, especially regarding how to reconstruct the subgraph to obtain an optimized structure corresponding to the glue subgraph and optimize the neural network model based on the reconstructed subgraph to improve the overall performance of the neural network model. Here, the reconstructed subgraph refers to: in the case of ensuring that the input tensor data and the output tensor data in the "glue" subgraph remain unchanged and the semantics represented by the overall "glue" subgraph remains unchanged, adding, deleting, and adjusting topological relationships of internal operators and intermediate results of the tensor data.

(12) Equivalence rules

In an embodiment of the present disclosure, equivalence rules include at least one of the equivalence rules of reshape operators, the equivalence rules of transpose operators, the equivalence rules of concat operators, and the equivalence rules of split operators. The following embodiments of the present disclosure will explain them one by one.

Essentially, the equivalence rules describe logical relationships of the glue operators that may be optimized. In an embodiment of the present disclosure, the logical relationships of the glue operators are that in at least two glue operators, the output data of one operator is handed over to another operator as the input data for operations.

(13) Artificial intelligence processor

An artificial intelligence processor is also called a dedicated processor. In an embodiment of the present disclosure, the artificial intelligence processor refers to a processor specialized in specific applications or domains. For example, a GPU, also known as a display core, a vision processor, or a display chip, is a dedicated processor for image computation on a personal computer, a workstation, a game console, and some mobile devices (such as a tablet computer, a smart phone, and the like); and a neural-network processing unit (NPU) is a dedicated processor for the multiply operation of matrix in the field of artificial intelligence applications. The processor adopts a structure of data-driven parallel calculation and specializes in processing massive multimedia data of video and image.

(14) Software stack for artificial intelligence processors

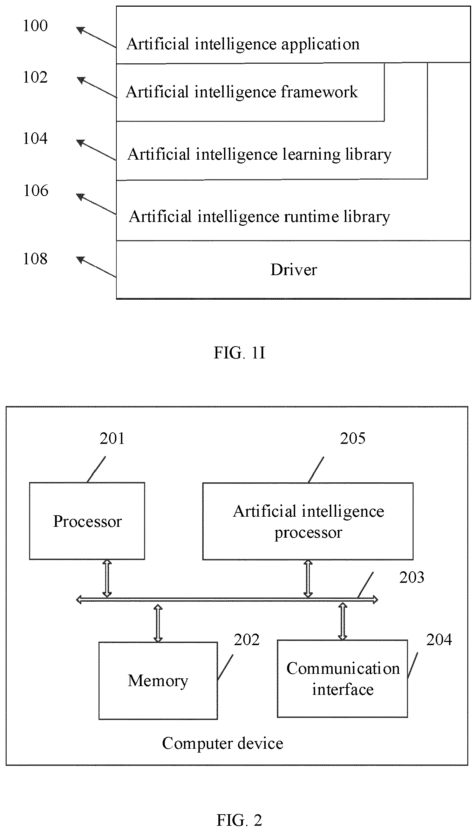

Referring to FIG.1I, a software stack structure 10 may include an artificial intelligence application 100, an artificial intelligence framework 102, an artificial intelligence learning library 104, an artificial intelligence runtime library 106, and a driver 108. The detailed explanation will be made below.

The artificial intelligence application 100 may provide a corresponding artificial intelligence algorithm model according to different application scenarios. The algorithm models may be directly parsed by a programming interface of the artificial intelligence framework 102. In one of possible implementations, the artificial intelligence algorithm models may be converted to binary instructions by invoking the artificial intelligence learning library 104, and the binary instructions may be converted to artificial intelligence learning tasks by invoking the artificial intelligence runtime library 106, and the artificial intelligence learning tasks may be placed on a task queue and then may be invoked by the driver 108 to be executed by the underlying artificial intelligence processor. In another one of possible implementations, the artificial intelligence runtime library 106 may be directly invoked to run off-line operating files generated by the process above to reduce intermediate overheads of the software structure and improve operating efficiency.

The artificial intelligence framework is a first layer of an entire deep learning ecosystem. Early on, in the Caffe, a layer is regarded as a basic element for constructing a neural network. In later artificial intelligence frameworks such as TensorFlow and MXNet, although another name such as an Operator is adopted, the core idea of the Operator is still similar to that of layer in the Caffe; in other words, the calculation of the neural network may be further divided into various common operators for tensor data, and the artificial intelligence framework may need to embody deep learning tasks expressed by the calculation graph structure of the neural network into instructions and data that may be executed on a central processing unit (CPU) or the artificial intelligence processor. In this process, the artificial intelligence framework may adopt operators as specific elements for executing calculation tasks, which provides each operator with a kernel that may be executed on the CPU or the artificial intelligence processor. According to the calculation graph, the artificial intelligence framework may invoke and execute a kernel corresponding to each operator in the calculation graph to complete the calculation of the entire neural network.

In order to better understand the present disclosure, research ideas of technical solutions of the present disclosure will be explained in detail hereinafter.

In the prior art, the problem of data parallelism is that the scalability of the data parallelism depends on a batch size of data to be processed. Although this is usually not a problem in a training phrase, this is not sure in a reasoning phrase. Generally, for a neural network model for real-time services (including video surveillance, autonomous driving, and the like), the data to be processed is usually inputed serially in the form of stream, resulting in a small data scale or even a single picture for each processing. In this case, the data parallelism does not provide any degree of parallelism, and all work tasks are concentrated on a single core, which makes calculation resources brought by multiple cores may not be translated into the speed of processing tasks.

After completing the neural network model training by using datasets offline, the model may be deployed in a cloud server to process data from the outside. At this time, an application scenario may change from an offline training to an online reasoning. In an online reasoning phrase, one of important indexes is a delay, for example, time that the server receives the data to be processed and then returns a processed result, further, time of using the neural network model to process the data. A low delay may ensure that the cloud server may respond to data from a client terminal within the shortest time, and in some sensitive scenarios, the low delay may directly determine whether a solution may be applied or not. Therefore, in the online reasoning phrase, requirements for artificial intelligence processors may change from processing large batches of data with high throughput to processing small batches of data with low delay.

In this case, traditional data parallelism or model parallelism is difficult to effectively reduce the delay of processing reasoning tasks. For the data parallelism, having large batches of data is a premise, which is inconsistent with the small batches of data of the online reasoning. For the model parallelism, it may be usually used to process a large scale neural network model that exceeds a memory limit of a single device, therefore, distributing operators to different cores may not reduce the delay of the network. In order to really reduce the delay of reasoning tasks on multi-core processors, it is necessary to find a method of reasonably distributing reasoning and calculation tasks of small batches of data or even a single piece of data to each core of the multi-core structure to ensure that as many cores as possible participate in calculations at all times to make full use of resources of a multi-core structure. One method is to split calculation tasks of each operator in the neural network into multiple cores for calculations. This method may ensure that there are multiple cores at every moment even when reasoning tasks of a single picture are processed, so as to achieve a purpose of using multi-core resources to reduce the delay.

However, for multi-core artificial intelligence processors, there still are many problems to be solved. First, a deep learning artificial intelligence processor needs to customize its own hardware design to adapt data parallel characteristics of a deep learning algorithm itself and to improve calculation throughput, and the artificial intelligence processor often needs a sufficient data size to achieve high calculation efficiency, however, a further splitting within the operator may reduce a calculation scale of each core. When the splitting reaches a certain degree of granularity, on each core, loss of calculation efficiency may exceed benefits brought by increasing the degree of parallelism through the splitting. Therefore, between splitting parallelism and calculation efficiency, a sufficient degree of parallelism is provided while sufficient calculation efficiency is ensured.

Second, the neural network model may be regarded as a complex calculation graph consisting of often hundreds or even thousands of operators. Different kinds of operators have different algorithmic logic, which leads to different methods for splitting these operators. The splitting of each operator, in addition to balancing the calculation efficiency and the degree of parallelism, needs to consider a match between an operator in the front and an operator in the back when each operator is split, and even an overall impact of the splitting of each operator also should be considered. There are more and more large-scale complex networks with the quick development of deep learning. It is not practical to find a good parallel method manually, therefore, an automated method is required to ensure that a good splitting and parallel strategy may be given for different networks.

Additionally, portability to an underlying artificial intelligence processor may also be considered. For an artificial intelligence processor that lacks enough good programmability, workloads of modifying the software stack brought by an expansion from single core to multiple cores and realization of splitting parallelism within operators is extremely heavy. Traditional implementation of data parallelism and model parallelism is still based on an idea that a processing core completes calculation tasks of an operator, and therefore, not a lot of extra workloads may be brought. However, cross-core parallelism of a single operator requires modifying the implementation of the operator itself, and difficulty of this modification depends on both programmability of the artificial intelligence processor and complexity of the original operator implementation logic. Therefore, how to reduce extra overheads brought by implementing a low-delay reasoning process on the multi-core structure and reduce dependency of the workloads on the programmability of the artificial intelligence processor itself in the implementation process to make the method be applied to different multi-core artificial intelligence processors in the future may also be considered.

Based on the above-mentioned analytical description, in an embodiment of the present disclosure, by splitting the operator into a plurality of sub-operators with smaller scales, a calculation library under a single core architecture may be directly invoked, which may avoid extra workloads brought by reimplementation. For example, an activation operator may obtain many smaller activation operators through splitting, which means that completing each sub-task only requires invoking an original single core activation operator from multiple cores, and the activation operator does not need to be modified or reimplemented for the multiple cores. In this process, it needs to balance calculation efficiency of each operator itself after the splitting and the degree of parallelism, and simultaneously coordination between operators in the splitting may also be considered. A final target is to obtain a splitting parallelism solution that may effectively reduce end-to-end reasoning delay of the entire neural network model.

Additionally, it should be noted that the neural network processing method provided by embodiments of the present disclosure may avoid modifying a single core processor calculation library as much as possible and simultaneously realizing parallel execution of the neural network model on multi-core processors. Specifically, an upper frame may split the operator in the neural network model into several sub-operators that may be executed in parallel, and for each sub-operator, the deep learning framework may invoke the calculation library to generate machine instructions that the sub-operators execute on the single core. By loading the machine instructions of the sub-operators on different cores, the parallel calculation of the operator on the multi-core processor is realized. Specifically, since the deep learning framework may use the single core processor calculation library to generate the calculation instructions of the sub-operators, the input tensor data and the output tensor data of the operator in the neural network model may also be split into corresponding sub-tensor data as the operator is split into the sub-operators.

Based on the above-mentioned analysis, a schematic structural diagram of a hardware device to which the method of this present disclosure may be applied will be introduced first. FIG. 2 is a schematic structural diagram of a computer device according to an embodiment of the present disclosure. As shown in FIG. 2, a computer device 20 may include a general-purpose processor 201, a memory 202, a communication bus 203, a communication interface 204, and at least one artificial intelligence processor 205, where the general-purpose processor 201 and the artificial intelligence processor 205 are connected with the memory 202 and the communication interface 204 through the communication bus.

The general-purpose processor 201 may be a central processing unit (CPU), a general-purpose processor, a digital signal processor (DSP), an application-specific integrated circuit (ASIC), a field programmable gate array (FPGA), or other programmable logic devices, discrete gate or transistor logic devices, discrete hardware components, and the like. The general-purpose processor 201 may be a microprocessor or any conventional processor.

The general-purpose processor 201 may be an integrated circuit chip with signal processing capability. In the implementation process, each step of the neural network processing method of the present disclosure may be completed by the instructions of the general-purpose processor 201 that may be in the form of hardware such as an integrated logic circuit or in the form of software.

The memory 202 may be a read-only memory (ROM), a random access memory (RAM), and other memories. In an embodiment of the present disclosure, the memory 202 may be configured to store data and various software programs, for example, a program for splitting the neural network model according to a determined target splitting policy.

Optionally, in an embodiment of the present disclosure, the memory may include a physical apparatus for storing information, typically by digitizing the information and then storing the information in a medium using electrical, magnetic or optical means, and the like. The memory may also include apparatuses for storing information using electrical energy, such as the RAM, the ROM, and the like, apparatuses for storing information using magnetic energy, such as a hard disk, a floppy disk, a magnetic tape, a magnetic core memory, a magnetic bubble memory, and a USB flash disk, apparatuses for optically storing information, such as a compact disc (CD) or a digital versatile disc (DVD). Of course, the memory may also include memories using other manners, such as a quantum memory, a graphene memory, and the like.

The communication interface 204 may use transmitter-receiver sets, such as, but are not limited to, transceivers, to implement the communication between the computer device 20 and other devices or communication networks. For example, the communication interface 204 may be used to receive a model file sent by other devices.

The artificial intelligence processor 205 may be mounted on a host CPU as a co-processor, and the host CPU distributes tasks to it. In practical applications, the artificial intelligence processor 205 may perform one or more kinds of operations. Taking the NPU as an example, a core part of NPU is an arithmetic circuit, and the arithmetic circuit is controlled by a controller to extract matrix data in the memory 202 and perform multiplication and addition operations.

Optionally, the artificial intelligence processor 205 may include eight clusters, and each cluster may include four artificial intelligence processor cores.

Optionally, the artificial intelligence processor 205 may be an artificial intelligence processor with a reconfigurable structure. Here, the reconfigurable structure means that if an artificial intelligence processor may use reusablehardwareresources and flexibly change the structure according to different application requirements to provide the structure matched with each specific application requirement, the artificial intelligence processor is called a reconfigurable computing system, and the structure of the artificial intelligence processor is called the reconfigurable structure.

It should be understood that the computer device 20 is merely one example provided by an embodiment of the present disclosure, and that the computer device 20 may have more or fewer components than the components shown and may combine two or more components, or may have different implementations of components.

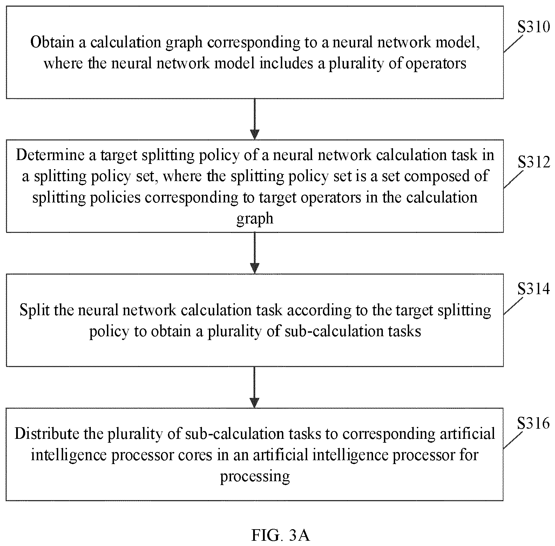

Based on the schematic structural diagram of the computer device shown in FIG. 2, with reference to a flowchart of a neural network processing method according to an embodiment of the present disclosure shown in FIG. 3A, how to implement the splitting of the neural network model will be described in detailed. The following detailed description takes the Caffe as an example and includes but is not limited to the following steps.

In a step S310, a calculation graph corresponding to a neural network model may be obtained, where the neural network model may include a plurality of operators, and the plurality of operators may be used to execute neural network calculation tasks.

Under a Caffe framework, a target operator may be a corresponding target layer in the neural network model. The target layer is at least one layer in the neural network model.

In an embodiment of the present disclosure, the calculation graph refers to: a method that uses a graph structure to describe a calculation process of the neural network model.

In an embodiment of the present application, the neural network model may receive input data and generate a predicted output according to the received input data and current model parameters. In practical applications, the neural network model may be a regression model, a deep neural network (DNN), a convolutional neural network (CNN), and a recurrent neural network (RNN), which is not limited in the embodiment of the present disclosure.

When the computer device executes the neural network calculation tasks, if the neural network calculation tasks have multi-layer operations, input neurons and output neurons of the multi-layer operations do not refer to neurons in an input layer and in an output layer of the entire neural network. For any two adjacent layers in the network, neurons in a lower layer of the network forward operation are the input neurons, and neurons in an upper layer of the network forward operation are the output neurons. For example, in the convolutional neural network, if the convolutional neural network model has L layers and K=1, 2, ..., L-1, for a K layer and a K+1 layer, the K layer is regarded as the input layer and neurons of the K layer are the input neurons, and the K+1 layer is regarded as the output layer and neurons of the K+1 layer are the output neurons. In other words, except a top layer, each layer may be the input layer, and the lower layer of that layer is the corresponding output layer.

In an embodiment of the present disclosure, different neural network models correspond to different neural network calculation tasks. For example, the neural network calculation tasks corresponding to the deep learning neural network model may be image classifications and text classifications; the neural network calculation tasks corresponding to the convolutional neural network model may be image recognition and video classifications; the neural network calculation tasks corresponding to a long short term memory (LSTM) neural network model may be speech recognition, image description and natural language process.

In a step S321, a target splitting policy of a neural network calculation task in a splitting policy set may be determined, where the splitting policy set is a set composed of splitting policies corresponding to target operators in the calculation graph.

In an embodiment of the present disclosure, determining the splitting policy set may include:

determining a splitting policy corresponding to the target operator according to a degree of parallelism, a splitting dimension, and a size of the splitting dimension corresponding the target operator in the calculation graph; and determining the splitting policy set according to the splitting policies corresponding to the target operators.

In an embodiment of the present disclosure, the target operator may be one operator in the plurality of operators.

In a scenario of a single model and single input, processing performance may be improved (such as reducing a delay and improving a throughput rate) by increasing the degree of parallelism of the model itself and using multiple artificial intelligence computing cores. The number of computing cores for processing the single model and the single input artificial intelligence processor is called a first degree of parallelism; in other words, it is called the degree of model parallelism. Users only require specifying the first degree of parallelism at compile time, and the artificial intelligence runtime library 106 may automatically divide the calculation graph corresponding to an original neural network model according to a plurality of dimensions such as topology, input and output, and model parameters, which enables a divided model to be executed in parallel on multiple computing cores and automatically ensures data synchronization between multiple cores. For examples, model parallelism technologies may be applied to divide a VGG16 classification network into the multiple cores and process a same input image in parallel, which may significantly decrease classification delay of a single image. Theoretically, the higher the first degree of parallelism, the more cores used, and the shorter execution time of the artificial intelligence processor.

The single model processes a plurality of inputs simultaneously and each input is processed by different computing cores, which is called a single-model multi-data parallel computing mode. It may be simply understood that a same model is copied multiple times and each model uses one or more cores (depending on the first degree of parallelism) to process different input data. However, in fact, the model (such as instructions and weights) is not copied, but shared by all cores. The degree of data parallelism refers to the number of pieces of input data processed, and it is also called a second degree of parallelism. For examples, data parallelism technologies may be applied to copy a same Alexnet model to the computing cores of 32 artificial intelligence processors for execution and process 32 different pictures respectively, so as to give full play to computing power of the artificial intelligence processor.

It may be understood that in an application scenario that only satisfies the pursuit of high throughput, the degree of parallelism of the target operator is called a second parallelism. In an application scenario that only satisfies certain delay constraints, the degree of parallelism of the target operator is a first parallelism.

In an embodiment of the present disclosure, two programming methods of data parallelism and model parallelism may be used in a superimposed manner to meet application scenarios where high throughput is required under certain delay constraints. The degree of parallelism includes the first degree of parallelism and the second degree of parallelism. In this case, the actual number of computing cores used is the degree of data parallelism multiplied by the degree of the model parallelism, and the product may not exceed the number of artificial intelligence processor computing cores in the artificial intelligence processor.

In an embodiment of the present disclosure, the degree of parallelism refers to how many operators that the operator may be split into. This variable is usually limited by the number of cores of the multi-core processor structure. Under the premise of not exceeding the upper limit of the number of cores, it should be guaranteed that the degree of parallelism is an integer power of 2.

In an embodiment of the present disclosure, the reason why the degree of parallelism is guaranteed to be the integer power of 2 lies in: in the prior art, integer powers of 2 are commonly used in the multi-core processor structure. For example, 1, 2, 4, 8, 16, and the like. A task whose degree of parallelism is not the integer power of 2 may often cause "fragments" in the scheduling of artificial intelligence processor cores.

In an embodiment of the present disclosure, a splitting dimension refers to the logical dimension along which the operator should split itself to obtain a series of sub-operators.

Taking the convolutional neural network as an example (specifically, the convolutional neural network is used for image classification or object detection), the tensor data in the calculation graph of the neural network model generally have four dimensions, including N representing a batch size of data processed by current calculations, C representing the number of feature maps, and H and W representing a size of feature maps. In practical applications, the computer device may select any one of the above-mentioned four dimensions for splitting.

It should be noted that for operators that are particularly sensitive to their splitting policies, it is very meaningful to select a dimension on which the operator is split. For example, for an activation operator, both input data and output data may be allowed to be split on any dimension. In practical applications, when the input data of the activation operator is split into several sub-blocks (in terms of consistency, the output data may be split in a same manner), which may be expressed as input0, input1, input2, ..., inputm-1, output0, output1, output2, ..., outputm-1, in the calculation phrase, the whole activation operator is actually split into m smaller activation operators and these activation operators have no dependency on each other and may be executed on multiple cores.

In an embodiment of the present disclosure, a size of the splitting dimension refers to a specific value of each sub-operator in the dimension after the operator is split into a series of sub-operators along the splitting dimension.

It should be further noted that the degree of parallelism of the operator may be obtained by multiplying the number of splitting in each dimension.

In an embodiment of the present disclosure, the splitting policy corresponding to each target operator may be determined according to the degree of parallelism, the splitting dimension and the size of the splitting dimension. In the case that the plurality of operators are included in the neural network model, the splitting policies corresponding to the plurality of target operators may be determined according to the degree of parallelism, the splitting dimension and the size of the splitting dimension that correspond to each target operator, which may constitute the splitting policy set. In general, in this case, the splitting policy set is determined according to the degree of parallelism, the splitting dimension and the size of the splitting dimension that correspond to each target operator.

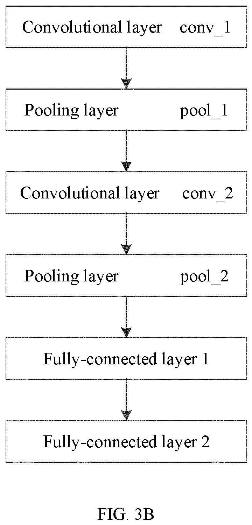

In order to facilitate understanding, the following description will be made in combination with specific embodiments. For example, taking the Caffe as an example, the following will be described in detail with reference to FIG. 3B. In FIG. 3B, various different types of operators (such as convolutional operators, pooling operators and fully-connected operators) are included in a neural network model for face recognition, where the connection between the operators is: convolutional layer 1-pooling layer1-convolutional layer2-pooling layer2-fully-connected layer 1-fully-connected layer 2. Since these operators may be allowed to be split on any dimension, in this case, the computer device may determine the splitting policy corresponding to each operator according to the degree of parallelism, the splitting dimension and the size of the splitting dimension and further constitute the splitting policy set.

In a possible implementation, various different types of operators are included in the neural network model, where some operators may be allowed to be split on any dimension, and some operators may only be allowed to be split on limited dimensions. Therefore, in this case, the computer device may respectively determine the splitting policies corresponding each operator and then determine the intersection of the splitting policies supported by each target operator in the plurality of operators as the splitting policy set. In general, in this case, the splitting policy set is determined according to the splitting policies supported by each target operator in the plurality of operators. Through this implementation, negative effects brought by unreasonable splitting policies may be avoided, for example, an increase in resource consumption of the computer device, a time-consuming problem caused by the unbalanced scale of the sub-operators after splitting, and so on.

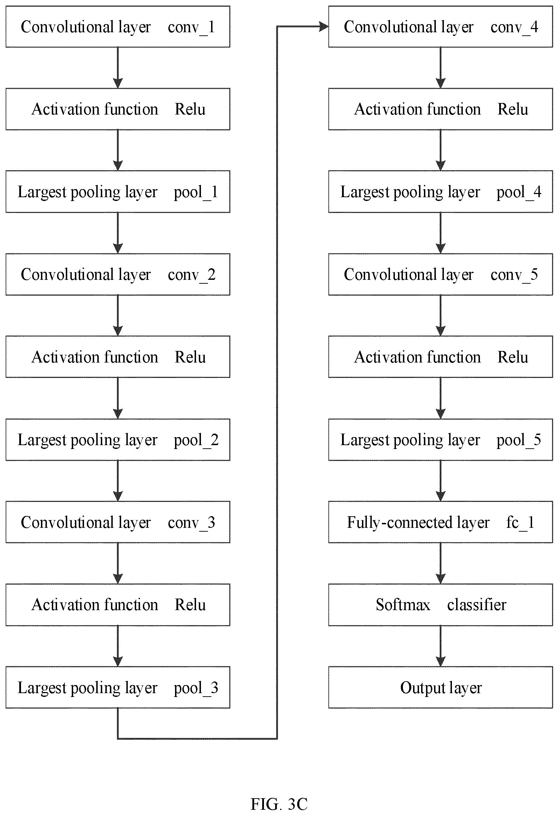

In order to facilitate understanding, the following description will be made in combination with specific embodiments. For example, as shown in FIG. 3C, various different types of operators (such as convolutional operators, pooling operators, activation operators, and softmax operators) are included in a neural network model for license plate character recognition, where the connection relationship between the operators is: convolutional layer 1-activation function Relu-largest pooling layer 1-convolutional layer 2-activation function Relu-largest pooling layer 2-convolutional layer 3-activation function Relu-largest pooling layer 3-convolutional layer 4-activation function-largest pooling layer 4-convolutional layer 5-activation function-largest pooling layer 5-fully-connected layer 1-softmax layer-output layer. Since operators such as convolutional operators, pooling operators and activation operators may be allowed to be split on any dimension but softmax operators may only be allowed to be split on limited dimensions, in this case, the computer device may determine the intersection of the splitting policies supported by each target operator in the plurality of operators as the splitting policy set.

In a possible implementation, various different types of operators are included in the neural network model, where some operators may not be supported to be split in any manner. However, in order to keep data splitting policy consistent with other operators in the neural network model, the neural network model may not be split in this case. Through this implementation, negative effects brought by unreasonable splitting policies may be avoided, for example, an increase in resource consumption of the computer device, a time-consuming problem caused by the unbalanced scale of the sub-operators after splitting, and so on.

In an embodiment of the present disclosure, in consideration of different characteristics of different operators and in order to avoid negative effects brought by unreasonable splitting policies, when splitting operators, the computer device may determine the splitting policies of the operators according to the types of the operators. The detailed description will be made with reference to Table 2.

Table 2

| Operation | Input dimension allowed to be split |
|---|---|
| Convolutional operator | N, C, H, W (Both H and W should not be less than the convolution kernel) |
| Fully-connected (FC) operator | N, C |
| Activation operator (Relu) | N, C, H, W |
| Scale | N, C, H, W |
| BatchNorm | N, C, H, W |
| Softmax | Dimension that is unable to be split and needs to be normalized |
| Pooling operator | N, C, H, W (Both H and W should not be less than the convolution kernel) |

As shown in the Table 2, the splitting policies supported by different types of operators are different. Through this implementation, the operator may be split in a targeted manner based on the characteristics of the operator, so that negative effects brought by unreasonable splitting policies, for example, an increase in resource consumption of the computer device, time-consuming problems caused by the unbalanced scale of the sub-operators after splitting, and so on, may be avoided.

Specifically, taking the convolutional operator as an example, in an embodiment of the present disclosure, different splitting policies of the convolutional operator may be described as the following five types. These five types may cross each other and exist at the same time to ensure a sufficient degree of splitting:

(1) if a N dimension of input data of a convolutional operator exceeds 1, the splitting is performed in the N dimension;
(2) the splitting is performed in a C dimension of the input data of the convolutional operator;
(3) the splitting is performed in the C dimension of output data of the convolutional operator;
(4) the splitting is performed in a H dimension of the input data of the convolutional operator;
(5) the splitting is performed in a W dimension of the input data of the convolutional operator.

It may be known that all the above-mentioned five splitting policies split an original convolutional operator into smaller convolutions.

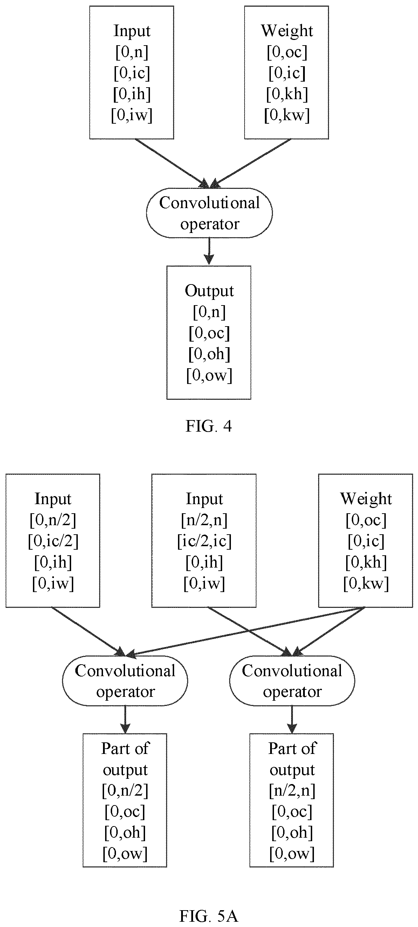

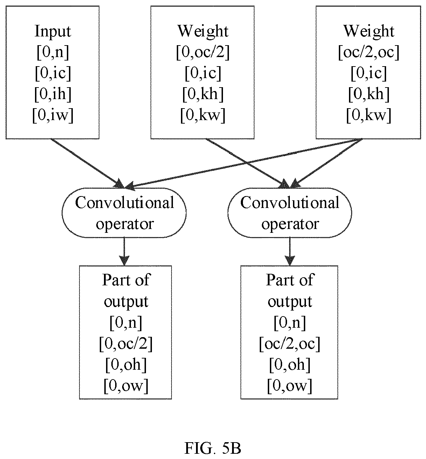

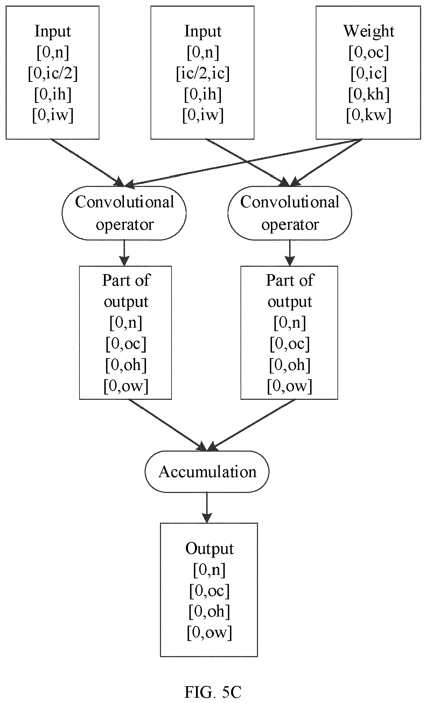

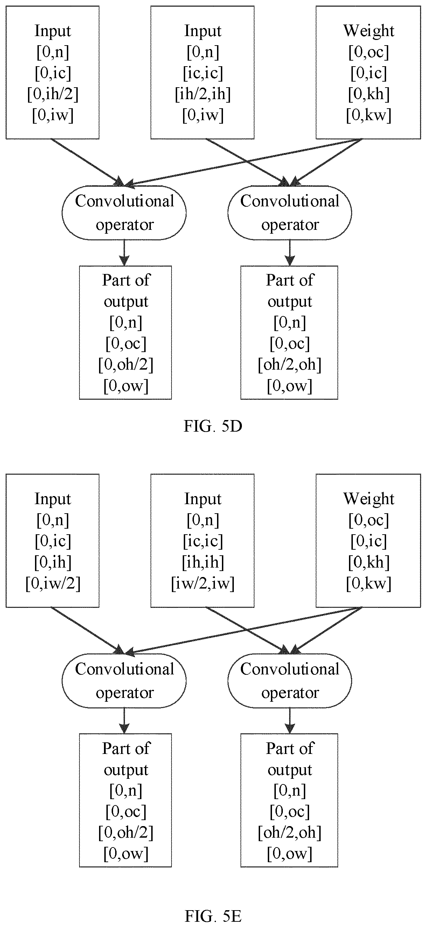

In order to facilitate understanding, the following description will be made in combination with specific embodiments. As shown in FIG. 4, an original calculation graph of a convolutional operator according to an embodiment of the present disclosure is provided. For a convolutional operator conv, it includes input data (input) in 4 dimensions, and under the action of a weight matrix, output data (output) may be obtained. As shown in FIGs. 5C to 5E, an embodiment of the present disclosure provides a plurality of splitting policies of a convolutional operator in a calculation graph in the case that a degree of parallelism is 2. Specifically, FIG. 5A is a schematic diagram of splitting according to a N dimension of input data; FIG. 5B is a schematic diagram of splitting according to a C dimension of output data; FIG. 5C is a schematic diagram of splitting according to a N dimension of input data; FIG. 5D is a schematic diagram of splitting according to a H dimension of input data; and FIG. 5E is a schematic diagram of splitting according to a W dimension of input data. It is required to be noted that these figures provide a starting point and an ending point of each dimension of each piece of tensor data, which are used to clarify a relationship between split sub-tensor data and original tensor data. In these figures, n represents a batch size of input tensor data; ic represents a count of input tensor data feature maps; ih represents a height of input tensor data feature maps; iw represents a width of the input tensor data feature maps; oc represents a count of output tensor data feature maps; oh represents a height of output tensor data feature maps; ow represents a width of output tensor data feature maps; kh represents a height of a convolution kernel window; and kw represents a width of the convolution kernel window. In practical applications, these splitting policies may be performed in different dimensions and at the same time may be combined with each other to form more new splitting policies, so as to provide a sufficient degree of parallelism to utilize multi-core resources and avoid excessive splitting on a single dimension to affect calculation efficiency to a certain extent.

For example, taking a softmax operator as an example, the computer device may split the softmax operator on any one or more of dimensions other than a dimension for probability normalization of the softmax operator. After the splitting, several softmax operators that may be executed in parallel are obtained.

In an embodiment of the present disclosure, determining the target splitting policy of the neural network calculation task in the splitting policy set may include:

determining weight values corresponding to the splitting policies corresponding to the target operators in the splitting policy set respectively; and
determining the target splitting policy according to the weight values.

In an embodiment of the present disclosure, time taken for the target operator to be executed in parallel on the multi-core processor according to a certain splitting policy may be characterized as a weight value. Here, it needs to be explained that calculation time that a multi-core processor takes to complete the operator depends on the longest time that a core takes to execute split sub-calculation tasks.

In an embodiment of the present disclosure, the weight value of the target operator splitting policy may be determined according to the following steps A11-A14:

In a step A11, calculation loads including c1, c2, ..., cn of n sub-operators after the splitting may be determined, where ci is calculated according to the type and scale of the i-th sub-operator after the splitting.

In a step A12, amount of memory access data including d1, d2, ..., dn of n sub-operators may be determined, where di is calculated according to the type and scale of the i-th sub-operator after the splitting.

In a step A13, a calculation throughput rate $\alpha$ of each artificial intelligence processor core may be determined. $\alpha$ is determined by performance parameters of the artificial intelligence processor itself.

In a step A14, a memory access bandwidth $\beta$ of each artificial intelligence processor may be determined. Generally speaking, the multiple cores of the artificial intelligence processor share a limited memory access bandwidth, therefore, $\beta = B / n$, where B is a total bandwidth of the multi-core artificial intelligence processor.

Based on the above-mentioned determined parameters, the computer device may calculate the weight value of the splitting policy of the target operator according to the following formula (1):

$$a.\quad t = \max_{i=1,...,n}(\max(c_i / \alpha, d_i / \beta)) \qquad\qquad (1).$$

In this formula, an operation of calculating the maximum value of an inner side in the formula is based on a fact that a calculation part and a memory access part implemented by the operator may hide each other; in other words, the calculation part and the memory access part may be performed concurrently as much as possible. For some artificial intelligence processors, when a scale of sub-operators is too small, calculation throughput of each core may be reduced.

In this case, a further modification may be performed on $\alpha$, so as to make an evaluation value more accurate. The operation of calculating the maximum value of the outside in the formula is based on a fact that the calculation time that the multi-core processor takes to complete the operator depends on the longest time that the core takes to execute the split sub-calculation tasks.

Finally, the weight of the target operator according to a certain splitting policy may be determined as a weight of the splitting policy. It may be understood that through the above-mentioned implementations, weights of the splitting policies included in the splitting policy set may be determined.

It needs to be noted that the above-mentioned method of calculating the weights is only a partial list of examples, not an exhaustive list. Those skilled in the art may produce other deformations or transformations on the basis of technical solutions of this present disclosure if they understand the essence of the technical solutions of this present disclosure. For example, measuring the weights of the splitting policies may be based on not only the time of executing sub-calculation tasks, but also the throughput of executing the sub-calculation tasks. Alternatively, by actually measuring the time of executing all the sub-calculation tasks according to the operator splitting mode corresponding to the splitting policy on the multi-core artificial intelligence processor, the weights of the splitting policies may be determined. However, as long as functions and technical effects realized by the modifications or variations are similar to those of the present disclosure, the modifications or variations shall fall within the scope of protection of the present disclosure.

In an embodiment of the present disclosure, after the computer device determines the weights of the splitting policies corresponding to the target operator in the splitting policy set according to the above-mentioned method, the computer device may determine a splitting policy with the smallest weight as the target splitting policy of the neural network model.

In a step S314, according to the target splitting policy, the neural network calculation task may be split to obtain a plurality of sub-calculation tasks.

In a step S316, the sub-calculation tasks may be distributed to corresponding artificial intelligence processor cores in the artificial intelligence processor for processing.

As mentioned before, the core idea of the technical solutions of the embodiments of the present disclosure is to split the calculation task of the target operator in the neural network model into smaller sub-calculation tasks so as to distribute the sub-calculation tasks to the multiple cores for parallel execution to make full use of hardware resources of a multi-core processor structure chip.

In this way, each sub-operator after the splitting may reuse instruction implementations of the operator under the single-core structure for calculations, which may avoid the reconstruction of the instruction implementations of an original operator.

In an embodiment of the present disclosure, the neural network model may be used to execute a specific neural network calculation task, such as face recognition, edge detection, semantic analysis, or the like. Here, an operation result refers to a result when the computer device executes a specific neural network calculation task. The operation result may include but is not limited to: precision of the neural network model, runtime of the neural network model, and the like. In practical applications, the computer device may output the operation result; in other words, the computer device may display the operation result on the display.

Based on the embodiments of the present disclosure, splitting the neural network calculation task into the plurality of sub-calculation tasks with smaller scales may enable the multi-core processor directly invoke the calculation library under the single-core structure, which may make full use of the hardware resources of the multi-core processor and further avoid the extra workloads brought by the reimplementation.

It should be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Secondly, those skilled in the art should also understand that the examples described in the specification are all optional, and the actions and modules involved are not necessarily required for this disclosure.

It should be further explained that though steps in the flowchart of FIG. 3A are shown by following the direction of arrows, yet these steps may not necessarily be performed according to the order indicated by the arrows. Unless clearly stated herein, the order for performing these steps is not strictly restricted. These steps may be performed in a different order. Additionally, at least part of the steps shown in FIG. 3A may include a plurality of sub-steps or a plurality of stages. These sub-steps or stages may not necessarily be performed and completed at the same time; instead, these sub-steps or stages may be performed at different time. These sub-steps or stages may not necessarily be performed sequentially either; instead, these sub-steps or stages may be performed in turn or alternately with at least part of other steps, or sub-steps of other steps, or stages.

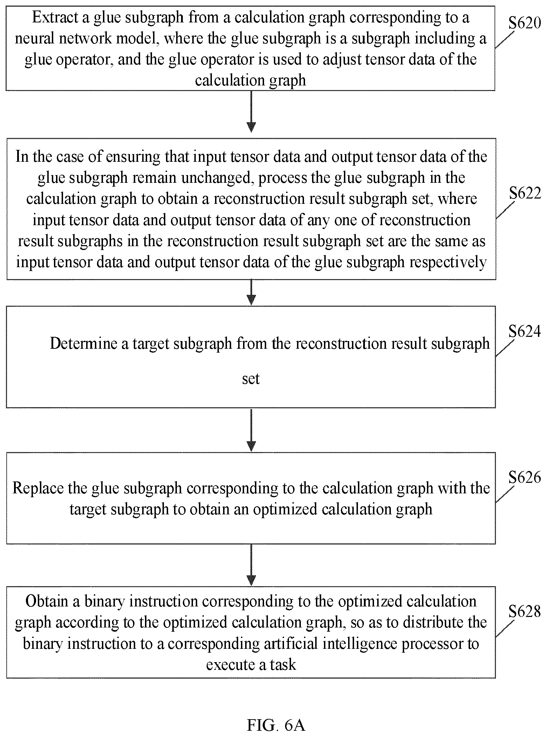

In a possible embodiment, referring to FIG. 6A, FIG. 6A is a flowchart of a neural network optimization method according to an embodiment of the present disclosure. Specifically, the embodiment of the present disclosure provides a method for optimizing a neural network model, which may include but is not limited to the following steps.

In a step S620, a glue subgraph may be extracted from a calculation graph corresponding to the neural network model, where the glue subgraph is a subgraph including a glue operator, and the glue operator is used to adjust tensor data of the calculation graph.

In an embodiment of the present application, "the neural network model" is also referred as a model, such as "a first neural network model", "a second neural network model" or "a third neural network model". The model may receive input data and generate a predictive output according to the input data received and current model parameters. In practical applications, the predictive output may include an image detection output result, a semantic analysis output result, an image classification output result, and the like. The neural network model may include a deep neural network (DNN) model, a convolutional neural network (CNN) model, an extreme learning machine (ELM) model, or other neural network models.

In an embodiment of the present disclosure, the glue operator is included in the neural network model. Specifically, the glue operator may include a reshape operator, a transpose operator, a concat operator, a split operator, and other glue operators that may be used to adjust a format of the tensor data, a shape of the tensor data in the neural network model and a distribution of the tensor data in a memory, which is not specifically limited in the embodiment of the present disclosure.

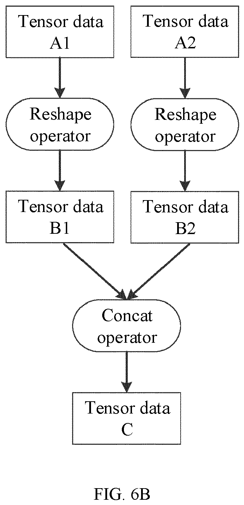

In an embodiment of the present disclosure, the calculation graph refers to: a method that uses a graph structure to describe a calculation process of the neural network model. For ease of explanation, the glue subgraph may be defined as the calculation graph including the glue operator. For example, the glue subgraph that is extracted from the calculation graph corresponding to the neural network model by the general-purpose processor in a computer device may be seen in FIG. 6B. As shown in FIG. 6B, a glue subgraph include a reshape operator and a concat operator, and all glue operators are associated with corresponding tensor data.

In a step S622, in the case of ensuring that input tensor data and output tensor data of the glue subgraph remain unchanged, the glue subgraph in a calculation graph may be processed to obtain a reconstruction result subgraph set, where input tensor data and the output tensor data of any one of reconstruction result subgraphs in the reconstruction result subgraph set are the same as those of the glue subgraph respectively.

In an embodiment of the present disclosure, a reconstruction result subgraph refers to a subgraph that may replace the glue subgraph. Specifically, the reconstruction result subgraph may be obtained by traversing a state set graph. Essentially, the reconstruction result subgraph is a path from a starting state to an ending state in the state set graph.

In an embodiment of the present disclosure, processing the glue subgraph in the calculation graph may include: in the case of ensuring that the input tensor data and the output tensor data of the glue subgraph remain unchanged and semantics represented by an overall glue subgraph remains unchanged, adding, deleting, and adjusting topological relationships of the glue operator and an intermediate result of the tensor data in an inner part of the glue subgraph.

In an embodiment of the present disclosure, in the case that the computer device extracts a plurality of glue subgraphs, the computer device may expand these glue subgraphs and may obtain an optimization structure corresponding to each glue subgraph by reconstructing the subgraph, or the computer device may only expand any one of the glue subgraphs and obtain an optimization structure corresponding to the glue subgraph by reconstructing the subgraph, which is not limited in the embodiment of the present disclosure.

In a specific implementation, processing the glue subgraph in the calculation graph to obtain the reconstruction result subgraph set may include but is not limited to the following steps A21-A23. The detailed explanation will be made hereinafter.

In a step A21, the glue subgraph may be expanded according to a logic relationship of the glue operator to obtain an expanded glue subgraph.

In a specific implementation, expanding the glue subgraph according to the logic relationship of the glue operator to obtain the expanded glue subgraph may include: expanding a logic relationship between glue operators in the glue subgraph according to equivalence rules to obtain an logic relationship equivalent to semantics of the glue subgraph; and expanding the glue subgraph according to the logic relationship equivalent to the semantics of the glue subgraph to obtain the expanded glue subgraph.

Here, expanding the logic relationship between the glue operators in the glue subgraph according to the equivalence rules may include:
converting an operator sequence corresponding to the logic relationship and ensuring that all logic relationships equivalent to the semantics of the glue subgraph may be obtained according to the equivalence rules.

In an embodiment of the present disclosure, the equivalence rules include at least one of the equivalence rules of reshape operators, the equivalence rules of transpose operators, the equivalence rules of concat operators, and the equivalence rules of split operators. Essentially, the equivalence rules are rules of optimization according to the logical relationship of the glue operator. The detailed explanation will be made in the following.

(1) the equivalence rules of reshape operators: in an embodiment of the present disclosure, the logic relationship of the glue operator may include the logic relationship between the reshape operators or the logic relationship between the reshape operator and other operators of the first type, where the other operators of the first type may include any one of transpose operator, concat operator and split operator.

In a possible implementation, the logic relationship of the glue operator may include the logic relationship between the reshape operators, for example, a plurality of continuous reshape operators. In another possible implementation, the logic relationship of the glue operator may include the logic relationship between the reshape operator and the other operators of the first type, for example, the reshape operator is adjacent to the transpose operator; the reshape operator is adjacent to the concat operator; and the reshape operator is adjacent to the split operator, and so on. In an embodiment of the present disclosure, an adjacency of one operator to another operator is used to characterize that output tensor data of the one operator is used as input tensor data of the another operator.

In an embodiment of the present disclosure, the logic relationship of the glue operator may be understood as an execution logic of the computer device in the process of executing the program code of the neural network model.

For example, when the computer device executes a certain piece of program code, the reshape operator may be executed first and then the transpose operator may be executed. In this case, the computer device uses the output tensor data of the reshape operator as the input tensor data of the transpose operator.

A first case is that the output tensor data of the transpose operator is the input tensor data of the reshape operator.

In a specific implementation, the logic relationship of the glue operator may include the case that the output tensor data of the transpose operator is used as the input tensor data of the reshape operator. In this case, the computer device may determine a logic relationship equivalent to semantics of a glue subgraph "transpose operator and reshape operator" according to the logic relationship of the glue operator. This process may include:

during the execution of the transpose operator, the relative positions of the dimensions where the reshape operator performs dimensionality merging remain unchanged, and the output tensor data of the reshape operator is used as the input tensor data of the transpose operator.

In an embodiment of the present disclosure, the dimension refers to the dimension of the tensor data in the calculation graph in the neural network model. Taking the convolutional neural network as an example, the dimension of the tensor data in the calculation in the convolutional neural network may generally include four dimensions, including N representing the batch size of the data processed by the current calculation, C representing the number of feature maps, and H and W representing the size of the feature maps.

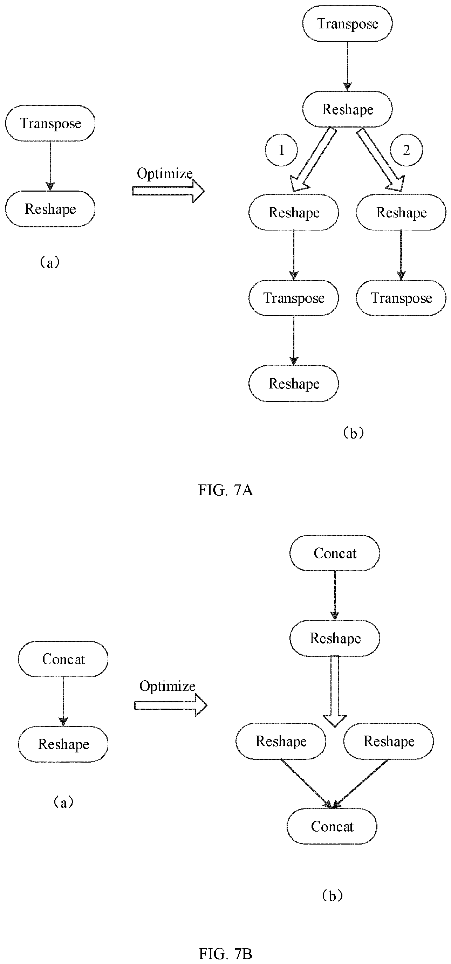

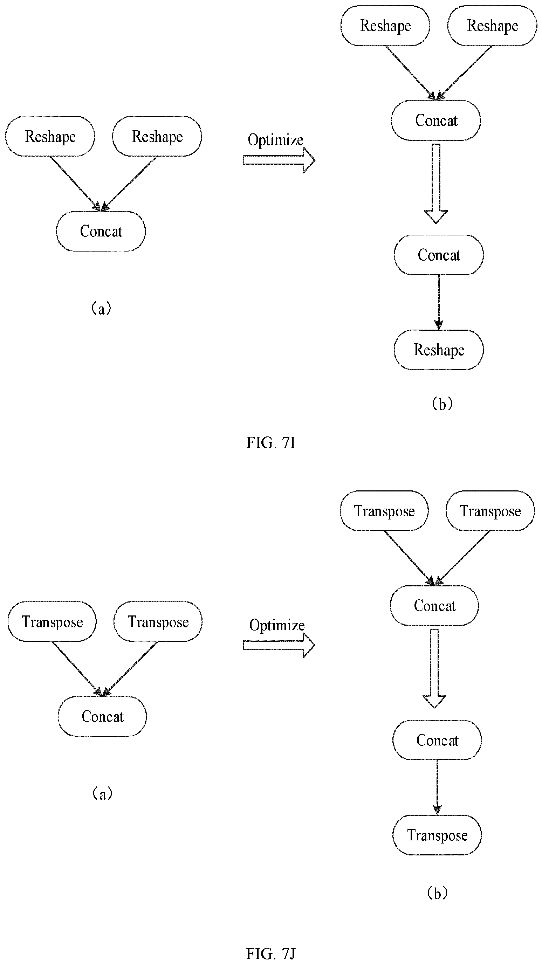

In an embodiment of the present disclosure, as shown by a in FIG. 7A, the calculation graph corresponding to the neural network model includes the reshape operator and the transpose operator, where the output tensor data of the transpose operator is used as the input tensor data of the reshape operator, and if relative positions of dimensions where the reshape operator performs dimensionality merging remain unchanged. In a possible implementation, as shown by b in FIG. 7B, an optimization may be performed according to an optimization path (1) by using part of the output tensor data of the reshape operator as the input tensor data of the transpose operator so as to obtain the logic relationship equivalent to the semantics of the glue subgraph. In another possible implementation, the optimization may be performed according to the optimization path by using the output tensor data of the reshape operator as the input tensor data of the transpose operator, so as to obtain the logic relationship equivalent to the semantics of the glue subgraph.

In order to facilitate understanding, the following description will be made in combination with specific embodiments. Tensor A=[3, 4, 5]; after the tensor A passes the transpose operator, tensor B= [5, 3, 4] may be obtained; simultaneously, after the tensor B passes the reshape operator, tensor C=[5, 6, 2] may be obtained. Here, the operation of the reshape operator in the latter two dimensions may be considered as merging 3 and 4 first and then splits them into 6 and 2. By analyzing tensor A=[3, 4, 5] and tensor B =[5, 3, 4], it may be known that the relative positions of 3 and 4 before and after the transpose operator remain unchanged. In this case, output tensor data of the reshape operator may be used as input tensor data of the transpose operator, whose implementation process may be described as the following: tensor A=[3, 4, 5]; after the tensor A passes the reshape operator, tensor B'=[6, 2, 5] may be obtained; simultaneously, after the tensor B' passes the transpose operator, tensor C'=[5, 6, 2] may be obtained. It may be understood that since a logical relationship equivalent to semantics of the glue subgraph obtained by the optimization may improve overall performance of the neural network model, then, when the processor (for example, a general purpose processor CPU or a dedicated artificial intelligence processor) runs an optimized neural network model, resource consumption of the computer device may be reduced.

A second case is that output tensor data of the concat operator is used as input tensor data of the reshape operator.

In a specific implementation, the logic relationship of the glue operator may include the case that the output tensor data of the concat operator is used as the input tensor data of the reshape operator. In this case, the computer device may determine a logic relationship equivalent to semantics of a glue subgraph "concat operator and reshape operator" according to the logic relationship of the glue operator. This process may include:

if the dimension $k_0+k_1+...+k_m$ operated by the concat operator is split into

$$p_0 \times p_1 \times ... \times (k_0 \Big/ \prod_i p_i + k_1 \Big/ \prod_i p_i + ... + k_m \Big/ \prod_i p_i) \times ... \times p_{n-1} \times p_n$$ in the splitting phrase of the reshape operator, the output tensor data of the reshape operator is used as the input tensor data of the concat operator, where $k_0$, $k_1$, and $k_m$ represent a size of dimension concatenated by the concat operator.

In an embodiment of the present disclosure, as shown by a in FIG. 7B, the calculation graph corresponding to the neural network model includes the reshape operator and the concat operator, where the output tensor data of the concat operator is used as the input tensor data of the reshape operator. If the dimension $k_0+k_1+...+k_m$ operated by the

concat operator is split into a form like $$p_0 \times p_1 \times ... \times (k_0 \Big/ \prod_i p_i + k_1 \Big/ \prod_i p_i + ... + k_m \Big/ \prod_i p_i) \times ... \times p_{n-1} \times p_n$$ in the splitting phrase of the reshape operator, as shown by b in FIG. 7B, the output tensor data of the reshape operator is used as the input tensor data of the concat operator, so as to obtain the logic relationship equivalent to the semantics of the glue subgraph.

In order to facilitate understanding, the following description will be made in combination with specific embodiments. Tensor A=[3, 4, 5]; tensor B=[3, 6, 5]; after the tensor A and the tensor B pass the concat operator, tensor C=[3, 10, 5] may be obtained; simultaneously, after the tensor C passes the reshape operator, tensor D=[15, 2, 5] may be obtained. By analyzing the above-mentioned changing process, it may be known that a dimension 10 in the output tensor of the concat operator (the tensor C) is obtained by accumulating both the dimension 4 in the tensor A and the dimension 6 in the tensor B. In the above execution process, the reshape operator merges the dimensions first and then splits the merged dimensions. When the tensor C passes the reshape operator, the dimension 10 is split into a series of factors {5, 2}, and the dimension 10 may be expressed as a form of (4/2+6/2)*2. In this case, the output tensor data of the reshape operator is used as the input tensor data of the concat operator, whose implementation process may be described as the following: tensor A=[3, 4, 5]; tensor B=[3, 6, 5]; after the tensor A and the tensor B pass the reshape operator, tensor C'=[6, 2, 5] and tensor D'= [9, 2, 5] may be obtained; then, after the tensor C' and the tensor D' pass the concat operator, tensor E'=[15, 2, 5] may be obtained. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

A third case is that output tensor data of the split operator is used as input tensor data of the plurality of reshape operator.

In a specific implementation, the logic relationship of the glue operator may include the case that the output tensor data of the split operator is used as the input tensor data of a plurality of reshape operators. In this case, the computer device may determine a logic relationship equivalent to semantics of a glue subgraph "split operator and the plurality of reshape operators" according to the logic relationship of the glue operator. This process may include: after output tensors of the split operator pass corresponding reshape operators, at most only one dimension has a different length, and the output tensor data of the plurality of the reshape operators is used as the input tensor data of the split operator.

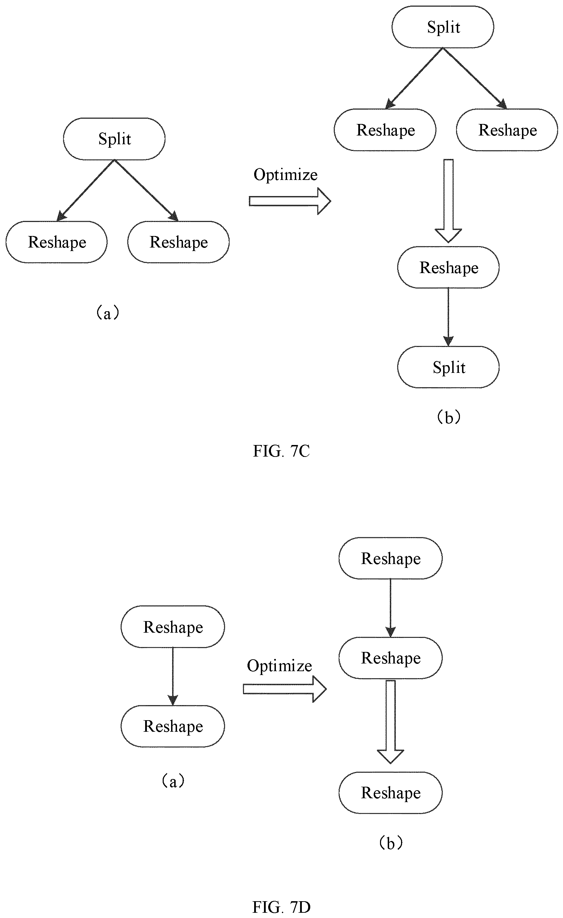

In an embodiment of the present disclosure, as shown by a in FIG. 7C, the calculation graph corresponding to the neural network model includes the plurality of the reshape operators and the split operator. The output tensor data of the split operator is used as the input tensor data of the plurality of the reshape operators, and after all the input tensors of the split operator are reshaped by the corresponding reshape operators, at most only one dimension has a different length. For example, if only the length of the C dimension is different, in this case, as shown by b in FIG. 7C, the output tensor data of the plurality of the reshape operators may be used as the input tensor data of the split operator, so as to obtain the logic relationship equivalent to the semantics of the glue subgraph.

In order to facilitate understanding, the following description will be made in combination with specific embodiments. Tensor A=[3,15,4]; after the tensor A passes the split operator, tensor B=[3,6,4] and tensor C=[3,9,4] may be obtained; after the tensor B and the tensor C pass respective corresponding reshape operators, tensor D=[6,3,4] and tensor E=[9,3,4] may be obtained. By analyzing the tensor D and the tensor E, it may be known that there is only one different dimension in the output tensor of the reshape operator (such as a dimension 6 in the tensor D and a dimension 9 in the tensor E), and then, in this case, the output tensor data of the plurality of the reshape operators may be used as the input tensor data of the split operator. The implementation process may be described as the following: tensor A=[3,15,4]; after the tensor A passes the reshape operator, tensor B=[15,3,4] may be obtained; simultaneously, after the tensor B passes the split operator, tensor C'=[6,3,4] and tensor D'=[9,3,4] may be obtained. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

A fourth case is the plurality of continuous reshape operators.

In a specific implementation, the logic relationship of the glue operator may include N continuous reshape operators. In this case, determining a logic relationship equivalent to semantics of a glue subgraph "the plurality of the reshape operators" according to the logic relationship of the glue operator may include: if the calculation graph corresponding to the neural network model includes N continuous reshape operators, the N reshaper operators may be merged to obtain one reshape operator. Here, N is a positive integer greater than or equal to 2, for example, N=2.

In an embodiment of the present disclosure, as shown by a in FIG.7D, the calculation graph corresponding to the neural network model includes the plurality of continuous reshape operators, and then, in this case, the computer device may merge the N continuous reshape operators to obtain the optimization structure as shown by b in FIG. 7D.

In order to facilitate understanding, the following description will be made in combination with specific embodiments. Taking tensor A=[A1, A2, A3, ..., An] as an example, after the tensor A passes a reshape 1 operator, tensor B=[B1, B2, B3, ..., Bn] may be obtained. Simultaneously, after the tensor B passes a reshape 2 operator, tensor C=[C1, C2, C3, ..., Cn] may be obtained. It may be understood that the input of a reshape 3 operator obtained by merging the reshape 1 operator and the reshape 2 operator is the tensor A, and the output is the tensor C. For example, tensor A=[1,32,1,1]; after the tensor A passes the reshape 1 operator, the tensor A becomes tensor B=[1,4,4,2], and then after the tensor B passes the reshape 2 operator, the tensor B becomes tensor C=[16,2]. Based on this technical solution of the present disclosure, by merging the reshape 1 operator and the reshape 2 operator, the reshape 3 operator may be obtained. After the tensor A passes the reshape 3 operator, tensor A=[1, 32, 1, 1] may become tensor C=[16, 2] directly. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

(2) the equivalence rules of transpose operators: in a specific implementation, the logic relationship of the glue operator may include the logic relationship between the transpose operators or the logic relationship between the transpose operator and other operators of the second type, where the other operators of the second type may include any one of the reshape operator, the concat operator and the split operator.

In a possible implementation, the logic relationship of the glue operator may include the logic relationship between the transpose operators, for example, a plurality of continuous transpose operators. In another possible implementation, the logic relationship of the glue operator may include the logic relationship between the transpose operator and the other operators of the second type, for example, the transpose operator is adjacent to the reshape operator; the transpose operator is adjacent to the concat operator; and the transpose operator is adjacent to the split operator, and so on. Here, the adjacency of one operator to another operator is used to characterize that the output tensor data of the one operator is used as the input tensor data of another operator.

A first case is that the output tensor data of the reshape operator is the input tensor data of the transpose operator.

In a specific implementation, the logic relationship of the glue operator may include the case that the output tensor data of the reshape operator is used as the input tensor data of the transpose operator. In this case, the computer device may determine a logic relationship equivalent to semantics of a glue subgraph "reshape operator and transpose operator" according to the logic relationship of the glue operator. This process may include:

if the relative positions of the dimension split from a same dimension of an intermediate state in the splitting phrase of the reshape operator remain unchanged in the process of executing the transpose operator, the output tensor data of the transpose operator may be used as the input tensor data of the reshape operator.

In an embodiment of the present disclosure, the dimension refers to the dimension of the tensor data in the calculation graph in the neural network model. Taking the convolutional neural network as an example, the dimension of the tensor data in the calculation in the convolutional neural network may generally include four dimensions, including N representing a batch size of data processed by a current calculation, C representing the number of feature maps, and H and W representing a size of feature maps.

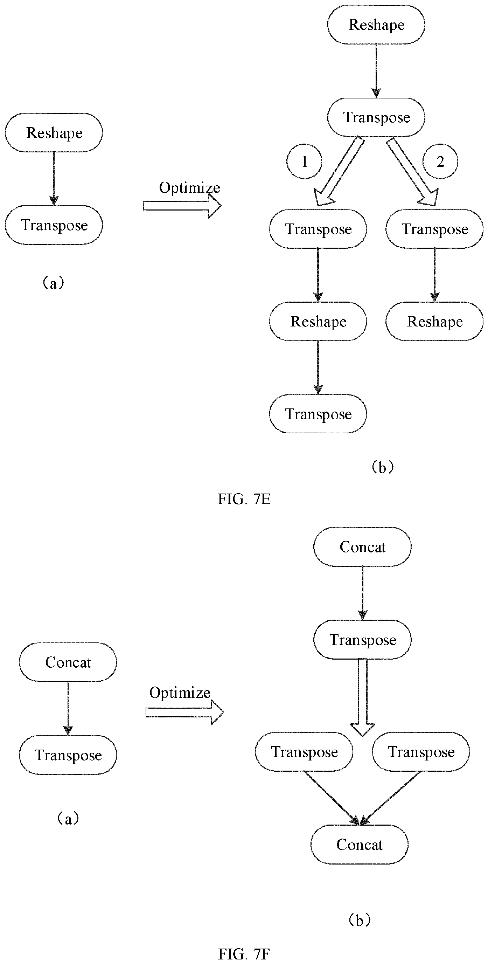

In an embodiment of the present disclosure, as shown by a in FIG. 7E, the calculation graph corresponding to the neural network model includes the reshape operator and the transpose operator, where the output tensor data of the reshape operator is used as the input tensor data of the transpose operator.If the relative positions of the dimension split from a same dimension of an intermediate state in the splitting phrase of the reshape operator remain unchanged in the process of executing the transpose operator, in a possible implementation, as shown by b in FIG. 7E, the optimization may be performed according to the optimization path (1), by using part of the output tensor data of the transpose operator as the input tensor data of the reshape operator, so as to obtain the logic relationship equivalent to the semantics of the glue subgraph. In another possible implementation, the optimization may be performed according to an optimization path (2) by using the output tensor data of the transpose operator as the input tensor data of the reshape operator, so as to obtain the logic relationship equivalent to the semantics of the glue subgraph.

In order to facilitate understanding, the following description will be made in combination with specific embodiments. Tensor A=[3,4,5]; after the tensor A passes the reshape operator, tensor B=[4,3,5] may be obtained; simultaneously, after the tensor B passes the transpose operator, tensor C=[5,4,3] may be obtained. In the above execution process, the reshape operator merges the dimension first and then splits the merged dimension. Here, in the process of executing the reshape operator, a dimension {3, 4} is merged first to obtain a dimension {12}, and then a dimension {12} is split to obtain a dimension {4, 3}. By analyzing tensor B=[4, 3, 5] and tensor C=[5, 4, 3], it may be known that the relative positions of the dimension {4, 3} in the execution process of the transpose operator remain unchanged. In this case, the output tensor data of the transpose operator may be used as the input tensor data of the reshape operator, whose implementation process may be described as the following: tensor A=[3, 4, 5]; after the tensor A passes the transpose operator, tensor B'=[5, 3, 4] may be obtained;simultaneously, after the tensor B' passes the reshaped operator, tensor C'=[5, 4, 3] may be obtained. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

A second case is that the output tensor data of the concat operator is the input tensor data of the transpose operator.

In a specific implementation, the logic relationship of the glue operator may include the case that the output tensor data of the concat operator is used as the input tensor data of the transpose operator. In this case, the computer device may determine a logic relationship equivalent to semantics of a glue subgraph "concat operator and transpose operator" according to the logic relationship of the glue operator. This process may include:

in an embodiment of the present disclosure, as shown by a in FIG. 7F, the calculation graph corresponding to the neural network model includes the transpose operator and the concat operator, where the output tensor data of the concat operator is used as the input tensor data of the transpose operator. In this case, as shown by b in FIG. 7F, the output tensor data of the transpose operator is used as the input tensor data of the concat operator, so as to obtain the logic relationship equivalent to the semantics of the glue subgraph.

In order to facilitate understanding, the following description will be made in combination with specific embodiments. Tensor A=[3, 4, 5]; tensor B=[3, 6, 5]; after the tensor A and the tensor B pass the concat operator, tensor C=[3, 10, 5] may be obtained; simultaneously, after the tensor C passes the transpose operator, tensor D=[10, 3, 5] may be obtained. Then, in this case, the output tensor data of the transpose operator may be used as the input tensor data of the concat operator, whose implementation process may be described as the following: tensor A=[3, 4, 5]; tensor B=[3, 6, 5]; after the tensor A and the tensor B pass respective corresponding transpose operators, tensor C'=[4, 3, 5] and tensor D'=[6, 3, 5] may be obtained; simultaneously, after the tensor C' and the tensor D' pass the concat operator, tensor E=[10, 3, 5] may be obtained. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

A third case is that the output tensor data of the split operator is the input tensor data of the plurality of transpose operators.

In a specific implementation, the logic relationship of the glue operator may include the case that the output tensor data of the split operator is used as the input tensor data of the plurality of transpose operators. The general purpose processor may optimize the calculation graph according to the logic relationship of the glue operator in the calculation graph. In this case, the computer device may determine a logic relationship equivalent to semantics of a glue subgraph "split operator and the plurality of transpose operators" according to the logic relationship of the glue operator. This process may include:

if the perm parameters corresponding to the plurality of transpose operators are the same, the output tensor data of the plurality of transpose operators may be used as the input tensor data of the split operator.

As mentioned earlier, the transpose operator may be expressed as tf.transpose (a, perm=None, name='transpose'). Then, it may be known that the transpose operator includes a perm parameter. In an embodiment of the present disclosure, the perm parameter is the total permutation of natural number sequence [1, 2, 3, ..., n], and different total permutations represent different transpose operators.

Specifically, the total permutation may be defined as: taking m (m is less than or equal to n) elements from n different elements arbitrarily and arranging them in a certain order, which is called a distribution of taking m elements from n different elements. When m is equal to n, all distributions may be called the total permutation. For example, a total permutation of three elements 1, 2, 3 may include: 1, 2, 3; 1, 3, 2; 2, 1, 3; 2, 3, 1; 3, 1, 2; 3, 2, 1.

In an embodiment of the present disclosure, the case that the perm parameters corresponding to the plurality of transpose operators are the same refers to: the total permutations corresponding to the plurality of transpose operators are the same.

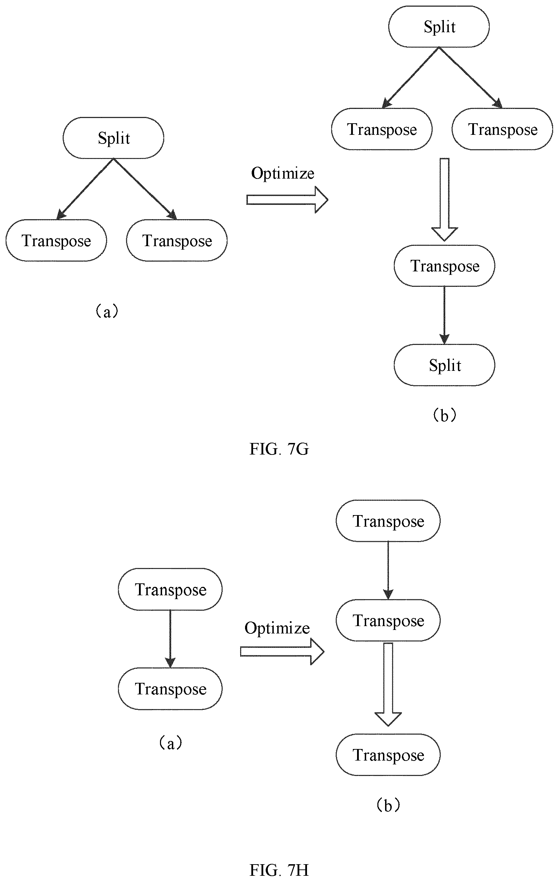

In an embodiment of the present disclosure, as shown by a in FIG. 7G, the calculation graph corresponding to the neural network model includes the plurality of the transpose operators and the split operator, where the output tensor data of the split operator is used as the input tensor data of the plurality of transpose operators. When the perm parameters corresponding to the plurality of transpose operators are the same, as shown by b in FIG. 7G, the output tensor data of the plurality of transpose operators may be used as the input tensor data of the split operator, so as to obtain the logic relationship equivalent to the semantics of the glue subgraph.

In order to facilitate understanding, the following description will be made in combination with specific embodiments. Tensor A=[3, 10, 5]; after the tensor A passes the split operator, tensor B=[3, 4, 5] and tensor C=[3, 6, 5] may be obtained; simultaneously, after the tensor B and the tensor C pass respective corresponding transpose operators, specifically, perm parameters corresponding to the transpose operators are [1, 0, 2], and tensor D=[4, 3, 5] and tensor E=[6, 3, 5] may be obtained. Then, in this case, the output tensor data of the plurality of transpose operators may be used as the input tensor data of the split operator, whose implementation process may be described as the following: tensor A=[3, 10, 5]; after the tensor A passes the transpose operator, tensor B'=[10, 3, 5] may be obtained; simultaneously, after the tensor B' passes the split operator, tensor C'=[4, 3, 5] and tensor D'=[6, 3, 5] may be obtained. It may be understood that since the logical relationship equivalent to the semantics of the glue subgraph obtained by optimization may improve the overall performance of the neural network model, then, when the processor (for example, the general purpose processor CPU and the dedicated artificial intelligence processor) runs the optimized neural network model, the resource consumption of the computer device may be reduced.

A fourth case is the plurality of continuous transpose operators.

In a specific implementation, the logic relationship of the glue operator may include M continuous transpose operators. In this case, the computer device may determine a logic relationship equivalent to semantics of a glue subgraph "the plurality of transpose operators" according to the logic relationship of the glue operator. This process may include: when the calculation graph corresponding to the neural network model includes the M continuous transpose operators, the M continuous transpose operators may be merged to obtain one transpose operator. Here, M is a positive integer greater than or equal to 2, for example, M=2.

In a specific implementation, the M continuous transpose operators may include a first transpose operator and a second transpose operator. Merging the M transpose operators into one transpose operator may include: determining the perm parameters corresponding to each of the first transpose operator and the second transpose operator; determining a first parameter according to the perm parameters corresponding to each of the first transpose operator and the second transpose operator, where the first parameter is a perm parameter corresponding to the merged transpose operator.

In a specific implementation, determining the first parameter according to the perm parameters corresponding to each of the first transpose operator and the second transpose operator may include: when determining the first parameter, it is calculated according to the following formula: $perm3[i] = perm1[perm2[i]]$, where $perm3$ represents the first parameter, $perm1$ represents the perm parameter corresponding to the first transpose operator, and $perm2$ represents the perm parameter corresponding to the second transpose operator. Here, [] represents taking the elements in the array.

For example, the perm parameter corresponding to the first transpose operator is perm 1=[1, 2], and the perm parameter corresponding to the second transpose operator is perm 2=[2, 1]. If i=1, perm3[1]=perm1[perm2[1]]=2. If i=2, perm3[2]= perm1[perm2[2]]=1. Therefore, perm3=[2, 1], which is the perm parameter corresponding to the merged transpose operator. Further, the merged transpose operator converts the sequence of the tensor data under the determined perm 3 parameter.

In an embodiment of the present disclosure, as shown by a in FIG.7H, the calculation graph corresponding to the neural network model includes the plurality of continuous transpose operators. In this case, the computer device may merge the M continuous transpose operators to obtain the optimization structure as shown by b in FIG. 7H. The optimization structure is the logic relationship equivalent to semantics of the glue subgraph "the plurality of transpose operators".

In order to facilitate understanding, the following description will be made in combination with specific embodiments. For example, tensor A=[1, 4, 3, 2]; after the tensor A passes the transpose_1423 operator, the tensor A becomes tensor B=[1, 2, 4, 3], and then after the tensor A passes the transpose_1243 operator, the tensor A becomes tensor C=[1, 2, 3, 4]. Based on this technical solution of the present disclosure, by merging the transpose_1423 operator and the transpose_1243 operator, a transpose_1432 operator may be obtained. After the tensor A passes the transpose_1432 operator, tensor A=[1, 4, 3, 2] may become tensor C=[1, 2, 3, 4] directly. Since the processor (for example, the general purpose processor like the CPU and the dedicated processor like the artificial intelligence processor) runs the neural network model, it does not need to execute two different transpose operators in sequence, but only executes the merged transpose operator, which may reduce redundant calculation to achieve the purpose of reducing the resource consumption of the computer device.

(3) The equivalence rules of concat operators: in a specific implementation, the logic relationship of the glue operator may include the logic relationship between the concat operators or the logic relationship between the concat operator and other operators of the third type. The other operators of the third type may include any one of the reshape operators, the transpose operators and the split operators.

In a possible implementation thereof, the logic relationship of the glue operator may include the logic relationship between the concat operators, for example, a plurality of continuous concat operators. In another possible implementation, the logic relationship of the glue operator may include the logic relationship between the concat operator and the other operators, for example, the concat operator is adjacent to the reshape operator; the concat operator is adjacent to the transpose operator; and the concat operator is adjacent to the split operator, and so on. Here, the adjacency of one operator to another operator is used to characterize that the output tensor data of the one operator is used as the input tensor data of another operator.

A first case is that the output tensor data of the plurality of reshape operators is the input tensor data of the concat operator.

In a specific implementation, the logic relationship of the glue operator may include the case that the output tensor data of the plurality of reshape operators is used as the input tensor data of the concat operators. In this case, the computer device may determine a logic relationship equivalent to semantics of a glue subgraph "the plurality of reshape operators and concat operator" according to the logic relationship of the glue operator. This process may include:

when at most only one dimension of the input tensors corresponding to the plurality of reshape operators has a different length, the output tensor data of the concat operator is used as the input tensor data of the plurality of the reshape operators.

In an embodiment of the present disclosure, as shown by a in FIG. 71, the calculation graph corresponding to the neural network model includes the concat operator and the plurality of the reshape operators, where the output tensor data of the plurality of reshape operators is used as the input tensor data of the concat operator. When at most only one dimension of the input tensors corresponding to the plurality of reshape operators has a different length, for example, only the length of the W dimension is different, in this case, as shown by b in FIG. 71, the output tensor data of the concat operator may be used as the input tensor data of the plurality of the reshape operators, so as to obtain the logic relationship equivalent to the semantics of the glue subgraph.

In order to facilitate understanding, the following description will be made in combination with specific embodiments. Tensor A=[3, 4, 5]; tensor B=[3, 6, 5]; after the tensor A and the tensor B pass respective corresponding reshape operators, tensor C=[6, 2, 5] and tensor D=[9, 2, 5] may be obtained; simultaneously, after the tensor C and the tensor D pass the concat operator, tensor E=[15, 2, 5] may be obtained. By analyzing the tensor A and the tensor B (which are the input tensors of the reshape operator), it may be known that there is only one different dimension in the tensor A and the tensor B (such as the dimension 6 in the tensor A and the dimension 4 in the tensor B), and then, in this case, the output tensor data of the concat operator may be used as the input tensor data of the plurality of the reshape operators, whose implementation process may be described as the following: tensor A=[3, 4, 5]; tensor B=[3, 6, 5]; after the tensor A and the tensor B pass the concat operator, tensor C'=[3, 10, 5] may be obtained; simultaneously, after the tensor C' passes the reshape operator, tensor D'=[15, 2, 5] may be obtained. It may be understood that since the logical relationship equivalent to the semantics of the glue subgraph obtained by optimization may improve the overall performance of the neural network model, then, when the processor (for example, the general purpose processor like CPU and the dedicated processor like the artificial intelligence processor) runs the optimized neural network model, the resource consumption of the computer device may be reduced.

It needs to be noted that, in an embodiment of the present disclosure, when the plurality of reshape operators are the plurality of continuous reshape operators, the plurality of continuous reshape operators may be merged to obtain one reshape operator. For example, the reshape 1 operator is adjacent to th reshape2 operator; tensor A=[A1, A2, A3, ..., An]; after the tensor A passes the reshape 1 operator, tensor B=[B1, B2, B3, ..., Bn] may be obtained. Simultaneously, after the tensor B passes the reshape 2 operator, tensor C=[C1, C2, C3, ..., Cn] may be obtained. It may be understood that the input of the reshape 3 operator obtained by merging the reshape 1 operator and the reshape 2 operator is the tensor A, and the output is the tensor C. For example, tensor A=[1,32,1,1]; after the tensor A passes the reshape 1 operator, the tensor A becomes tensor B=[1,4,4,2], and then after the tensor B passes the reshape 2 operator, the tensor B becomes tensor C=[16,2]. Based on this technical solution of the present disclosure, by merging the reshape 1 operator and the reshape 2 operator, the reshape 3 operator may be obtained. After the tensor A is reshaped by the reshape 3 operator, tensor A=[1, 32, 1, 1] may become tensor C=[16, 2] directly. It may be understood that when the processor (for example, the general purpose processor like CPU and the dedicated processor like the artificial intelligence professor) runs the neural network model, since the neural network model is an optimized model, the resource consumption of the computer device may be reduced.

A second case is that the output tensor data of the plurality of transpose operator is the input tensor data of the concat operator.

In a specific implementation, the logic relationship of the glue operator may include the case that the output tensor data of the plurality of transpose operator is used as the input tensor data of the concat operator. In this case, the computer device may determine a logic relationship equivalent to semantics of a glue subgraph "the plurality of transpose operators and concat operator" according to the logic relationship of the glue operator. This process may include: in the case that the perm parameters corresponding to the plurality of transpose operators are the same, the output tensor data of the concat operator may be used as the input tensor data of the plurality of transpose operators.

As mentioned earlier, the transpose operator may be expressed as tf.transpose(a, perm=None, name='transpose'). Then, it may be known that the transpose operator includes the perm parameters. In an embodiment of the present disclosure, the perm parameter is the total permutation of natural number sequence [1, 2, 3, ..., n], and different total permutations represent different transpose operators.

Specifically, the total permutation may be defined as: taking m (m is less than or equal to n) elements from n different elements arbitrarily and arranging them in a certain order, which is called the distribution of taking m elements from n different elements. If m=n, all distributions may be called the total permutation. For example, a total permutation of three elements 1, 2, 3 may include: 1, 2, 3; 1, 3, 2; 2, 1, 3; 2, 3, 1; 3, 1, 2; 3, 2, 1.

In an embodiment of the present disclosure, the case that the perm parameters corresponding to the plurality of transpose operators are the same refers to: the total permutations corresponding to the plurality of transpose operators are the same.

In an embodiment of the present disclosure, as shown by a in FIG. 7J, the calculation graph corresponding to the neural network model includes the concat operator and the plurality of transpose operators, where the output tensor data of the plurality of transpose operators is used as the input tensor data of the concat operator, and in the case that the perm parameters corresponding to the plurality of transpose operators are the same, as shown by b in FIG. 7J, the output tensor data of the concat operator may be used as the input tensor data of the plurality of transpose operators, so as to obtain the logic relationship equivalent to the semantics of the glue subgraph.

In order to facilitate understanding, the following description will be made in combination with specific embodiments. Tensor A=[3, 4, 5]; tensor B=[3, 6, 5]; after the tensor A and the tensor B pass the corresponding transpose operator, specifically, the perm parameters corresponding to the plurality of transpose operators are [1, 0, 2], and tensor C=[4, 3, 5] and tensor D=[6, 3, 5] may be obtained. Simultaneously, after the tensor C and the tensor D pass the concat operator, tensor E=[10, 3, 5] may be obtained. Then, in this case, the output tensor data of the concat operator may be used as the input tensor data of the plurality of transpose operators, whose implementation process may be described as the following: tensor A=[3, 4, 5]; tensor B=[3, 6, 5]; after the tensor A and the tensor B pass the concat operator, tensor C'=[3, 10, 5] may be obtained; simultaneously, after the tensor C' passes the transpose operator, tensor D'=[10, 3, 5] may be obtained. It may be understood that since the logical relationship equivalent to the semantics of the glue subgraph obtained by optimization may improve the overall performance of the neural network model, then, when the processor (for example, the general purpose processor like the CPU and the dedicated processor like the artificial intelligence processor) runs the optimized neural network model, the resource consumption of the computer device may be reduced.

It needs to be noted that, in an embodiment of the present disclosure, when the plurality of transpose operators are the plurality of continuous transpose operators, the plurality of continuous transpose operators may be merged to obtain one transpose operator. Specifically, the M continuous transpose operators may include the first transpose operator and the second transpose operator. Merging the first transpose operator and the second transpose operator into one transpose operator may include:

determining the perm parameters corresponding to the first transpose operator and the second transpose operator; and

determining the first parameter according to the perm parameters corresponding to the first transpose operator and the second transpose operator, where the first parameter is the perm parameter corresponding to the merged transpose operator.

In a specific implementation, determining the first parameter according to the perm parameters corresponding to each of the first transpose operator and the second transpose operator may include: when determining the first parameter, it is calculated according to the following formula: $perm3[i] = perm1[perm2[i]]$ , where $perm3$ represents the first parameter, $perm1$ represents the perm parameter corresponding to the first transpose operator, and $perm2$ represents the perm parameter corresponding to the second transpose operator. Here, [] represents taking the elements in the array.

For example, the perm parameter corresponding to the first transpose operator is perm 1=[1, 2], and the perm parameter corresponding to the second transpose operator is perm 2=[2, 1]. If i=1, perm3[1]=perm1[perm2[1]]=2. If i=2, perm3[2]= perm1[perm2[2]]=1. Therefore, perm3=[2, 1], which is the perm parameter corresponding to the merged transpose operator. Further, the merged transpose operator converts the sequence of the tensors under the determined perm 3 parameter.

In order to facilitate understanding, the following description will be made in combination with specific embodiments. For example, the transpose_1423 operator is adjacent to the transpose_1243 operator; tensor A=[1, 4, 3, 2]; after the tensor A passes the transpose_1423 operator, the tensor A becomes tensor B=[1, 2, 4, 3]; and then after the tensor A passes the transpose_1243 operator, the tensor A becomes tensor C=[1, 2, 3, 4]. Based on this technical solution of the present disclosure, by merging the transpose_1423 operator and the transpose_1243 operator, a transpose_1432 operator may be obtained. After the tensor A passes the transpose_1432 operator, tensor A=[1, 4, 3, 2] may become tensor C=[1, 2, 3, 4] directly. If the processor (for example, the general purpose processor like the CPU and the dedicated processor like the artificial intelligence processor) runs the neural network model, since the neural network model is the optimized model, the resource consumption of the computer device may be reduced.

A third case is that the output tensor data of the split operator is the input tensor data of the concat operator.

In a specific implementation, the logic relationship of the glue operator may include the case that the output tensor data of the split operator is used as the input tensor data of the concat operator In this case, the computer device may determine a logic relationship equivalent to semantics of a glue subgraph "split operator and concat operator" according to the logic relationship of the glue operator. This process may include: in the case that the dimensions operated separately by the concat operation and the split operator are the same, the concat operator and the split operator may be merged for elimination.

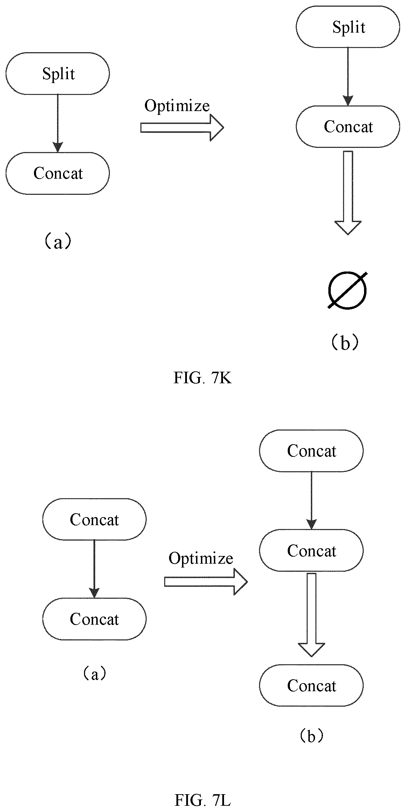

In an embodiment of the present disclosure, as shown by a in FIG. 7K, the calculation graph corresponding to the neural network model may include the concat operator and the split operator, where the output tensor data of the split operator is used as the input tensor data of the concat operator, and when it is satisfied that the dimensions operated separately by the concat operation and the split operator are the same, for example, the concat operator and the split operator are the same in the C dimension during the execution process, in this case, as shown in b in Figure 7K, the concat operator and the split operator may be merged for elimination.

In order to facilitate understanding, the following description will be made in combination with specific embodiments. Tensor A=[3, 10, 5]; after the tensor A passes the split operator, tensor B=[3, 4, 5] and tensor C=[3, 6, 5] may be obtained; simultaneously, after the tensor B and the tensor C pass the concat operator, tensor D=[3, 10, 5] may be obtained. Since the dimensions operated separately by the concat operation and the split operator are the same, in other words, it is satisfied that the output tensor data of the split operator is used as the input tensor data of the concat operator, and then, in this case, the concat operator and the split operator may be merged for elimination. It may be understood that since the above optimization operations may improve the overall performance of the neural network model, then, when the processor (for example, the general purpose processor like the CPU and the dedicated processor like the artificial intelligence processor) runs the optimized neural network model, the resource consumption of the computer device may be reduced.

A fourth case is N continuous concat operators.

In a specific implementation, the logic relationship of the glue operator may include N continuous concat operators, where N is a positive integer greater than or equal to 2. In this case, the computer device may determine a logic relationship equivalent to semantics of a glue subgraph "a plurality of concat operators" according to the logic relationship of the glue operator. This process may include:

When the dimensions operated separately by the N continuous concat operators are a same dimension, the N continuous concat operators may be merged.

In an embodiment of the present disclosure, as shown by a in FIG.7L, the calculation graph corresponding to the neural network model includes the plurality of continuous concat operators, where the dimensions operated separately by the plurality of continuous concat operators are a same dimension. For example, th N dimension. In this case, the computer device may merge the plurality of continuous concat operators to obtain one concat operator. Specifically, referring to the optimization structure shown by b in FIG. 7L, where the optimization structure is the logic relationship equivalent to semantics of the glue subgraph obtained by optimization.

(4) the equivalence rules of split operators: in a specific implementation, the logic relationship of the glue operator may include the logic relationship between the split operators or the logic relationship between the split operator and other operators of the fourth type, where the other operators of the fourth type may include any one of the reshape operators, the transpose operators and the concat operators.

In a possible implementation thereof, the logic relationship of the glue operator may include the logic relationship between the split operators, for example, a plurality of continuous split operators. In another possible implementation, the logic relationship of the glue operator may include the logic relationship between the split operator and the other operators, for example, the split operator is adjacent to the reshape operator; the split operator is adjacent to the transpose operator; and the split operator is adjacent to the concat operator, and so on. Here, the adjacency of one operator to another operator is used to characterize that the output tensor data of the one operator is used as the input tensor data of another operator.

A first case is that the output tensor data of the reshape operator is used as the input tensor data of the split operator.

In a specific implementation, the logic relationship of the glue operator may include the case that the output tensor data of the reshape operators is used as the input tensor data of the split operators. In this case, the computer device may determine a logic relationship equivalent to semantics of a glue subgraph "reshape operator and split operator" according to the logic relationship of the glue operator. This process may include: in the inverse derivation process of the reshape operator from the output to the input, the dimension $k_0 + k_1 + ... + k_m$ operated by the split operator as part of the output is split into $p_0 \times p_1 \times ... \times (k_0 / \prod_i p_i + k_1 / \prod_i p_i + ... + k_m / \prod_i p_i) \times ... \times p_{n-1} \times p_n$ in the inverse derivation process, and the output tensor data of the split operator is used as the input tensor data of the reshape operator.

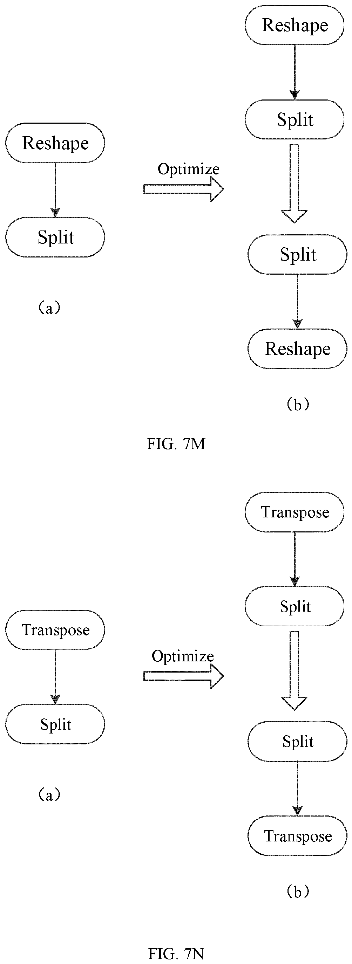

In an embodiment of the present disclosure, as shown by a in FIG. 7M, the calculation graph corresponding to the neural network model includes the split operator and the reshape operator, where the output tensor data of the reshape operator is used as the input tensor data of the split operator, and in the inverse derivation process of the reshape operator from the output to the input, the dimension $k_0 + k_1 + ... + k_m$ operated by the split operator as part of the output is split into $p_0 \times p_1 \times ... \times (k_0 / \prod_i p_i + k_1 / \prod_i p_i + ... + k_m / \prod_i p_i) \times ... \times p_{n-1} \times p_n$ in the inverse derivation process, and as shown by b in FIG. 7M, the output tensor data of the split operator is used as the input tensor data of the reshape operator, so as to obtain the logic relationship equivalent to the semantics of the glue subgraph.

In order to facilitate understanding, the following description will be made in combination with specific embodiments. Tensor A=[3, 10, 5]; after the tensor A passes the reshape operator, tensor B=[15, 2, 5] may be obtained; simultaneously, after the tensor B passes the split operator, tensor C=[6, 2, 5] and tensor D=[9, 2, 5] may be obtained; in other words, the dimension 15 is split into the dimension 6 and the dimension 9. When inversely deriving the reshape operator, the dimension 15 is split into the dimensions {3,5} under the action of the reshape operator. Then, in this case, the output tensor data of the split operator may be used as the input tensor data of the reshape perator, whose implementation process may be described as the following: tensor A=[3, 10, 5]; after the tensor A passes the split operator, tensor B'=[3, 4, 5] and tensor C'=[3, 6, 5] may be obtained; simultaneously, after the tensor B' and the tensor C' pass the corresponding reshape operator, tensor D'=[6, 2, 5] and tensor E'=[9, 2, 5] may be obtained. It may be understood that since the above optimization operations may improve the overall performance of the neural network model, then, when the processor (for example, the general purpose processor like the CPU and the dedicated processor like the artificial intelligence processor) runs the optimized neural network model, the resource consumption of the computer device may be reduced.

A second case is that the output tensor data of the transpose operator is the input tensor data of the split operator.

In a specific implementation, the logic relationship of the glue operator may include the case that the output tensor data of the transpose operator is used as the input tensor data of the split operator. In this case, the computer device may determine a logic relationship equivalent to semantics of a glue subgraph "transpose operator and split operator" according to the logic relationship of the glue operator. This process may include:

using the output tensor data of the split operator as the input tensor data of the transpose operator.

In an embodiment of the present disclosure, as shown by a in FIG. 7N, the calculation graph corresponding to the neural network model includes the split operator and the transpose operator, where the output tensor data of the transpose operator is used as the input tensor data of the split operator, and in this case, as shown by b in FIG. 7N, the output tensor data of the split operator may be used as the input tensor data of the transpose operator, so as to obtain the logic relationship equivalent to the semantics of the glue subgraph.

In order to facilitate understanding, the following description will be made in combination with specific embodiments. Tensor A=[3, 10, 5]; after the tensor A passes the transpose operator, tensor B=[10, 3, 5] may be obtained; simultaneously, after the tensor B passes the split operator, tensor C=[4, 3, 5] and tensor D=[6, 3, 5] may be obtained. Then, in this case, the output tensor data of the split operator may be used as the input tensor data of the transpose operator, whose implementation process may be described as the following: tensor A=[3, 10, 5]; after the tensor A passes the split operator, tensor B'=[3, 4, 5] and tensor C'=[3, 6, 5] may be obtained; simultaneously, after the tensor B' and the tensor C' pass respective corresponding transpose operators, tensor D'=[4, 3, 5] and tensor E'=[6, 3, 5] may be obtained. It may be understood that since the logical relationship equivalent to the semantics of the glue subgraph obtained by optimization may improve the overall performance of the neural network model, then, when the processor (for example, the general purpose processor like the CPU and the dedicated processor like the artificial intelligence processor) runs the optimized neural network model, the resource consumption of the computer device may be reduced.

A third case is that the output tensor data of the concat operator is the input tensor data of the split operator.

In a specific implementation, the logic relationship of the glue operator may include the case that the output tensor data of the concat operator is used as the input tensor data of the split operator. In this case, the computer device may determine a logic relationship equivalent to semantics of a glue subgraph "concat operator and split operator" according to the logic relationship of the glue operator. This process may include: in the case that the dimensions operated separately by the concat operator and the split operator are the same, the concat operator and the split operator may be merged for elimination.

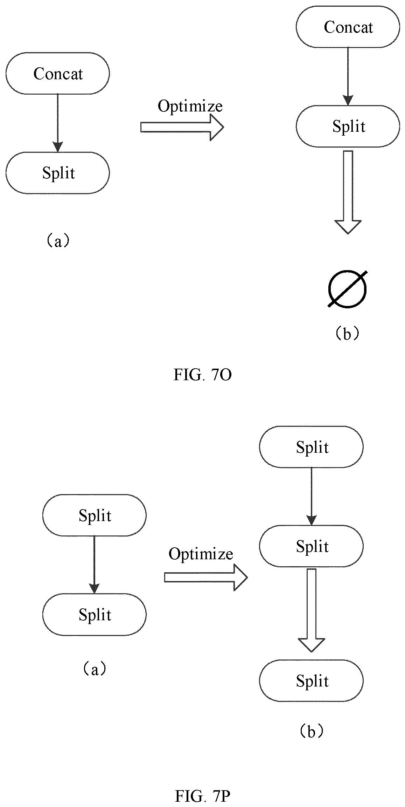

In an embodiment of the present disclosure, as shown by a in FIG. 7O, the calculation graph corresponding to the neural network model may include the split operator and the concat operator, where the output tensor data of the concat operator is used as the input tensor data of the split operator. When it is satisfied that the concat operator and the split operator are semantically inverse to each other, for example, the concat operator and the split operator are the same in the C dimension during the execution process, in this case, as shown in b in FIG. 7O, the concat operator and the split operator may be merged for elimination.

In order to facilitate understanding, the following description will be made in combination with specific embodiments. Tensor A=[3, 4, 5]; tensor B=[3, 6, 5]; after the tensor A and the tensor B pass the concat operator, tensor C=[3, 10, 5] may be obtained; simultaneously, after the tensor C passes the split operator, tensor D=[3, 4, 5] and tensor E=[3, 6, 5] may be obtained. Since the dimensions operated separately by the concat operation and the split operator are the same, and the concat operator and the split operator are semantically inverse to each other, and then, in this case, the concat operator and the split operator may be merged for elimination. It may be understood that since the above optimization operations may improve the overall performance of the neural network model, then, when the processor (for example, the general purpose processor like the CPU and the dedicated processor like the artificial intelligence processor) runs the optimized neural network model, the resource consumption of the computer device may be reduced.

A fourth case is N continuous split operators.

In a specific implementation, the logic relationship of the glue operator may include N continuous split operators, where N is a positive integer greater than or equal to 2. In this case, the computer device may determine a logic relationship equivalent to semantics of a glue subgraph "a plurality of split operators" according to the logic relationship of the glue operator. This process may include: in the case that the dimensions operated separately by the N continuous split operators are the same, the N continuous split operators may be merged.

In an embodiment of the present disclosure, as shown by a in FIG.7P, the calculation graph corresponding to the neural network model includes the plurality of split operators, where the dimensions operated by the plurality of continuous split operators are a same dimension. For example, the N dimension. In this case, the computer device may merge the plurality of split operators to obtain one split operator. Specifically, referring to the optimization structure shown by b in FIG. 7P, where the optimization structure is the logic relationship equivalent to semantics of the glue subgraph.

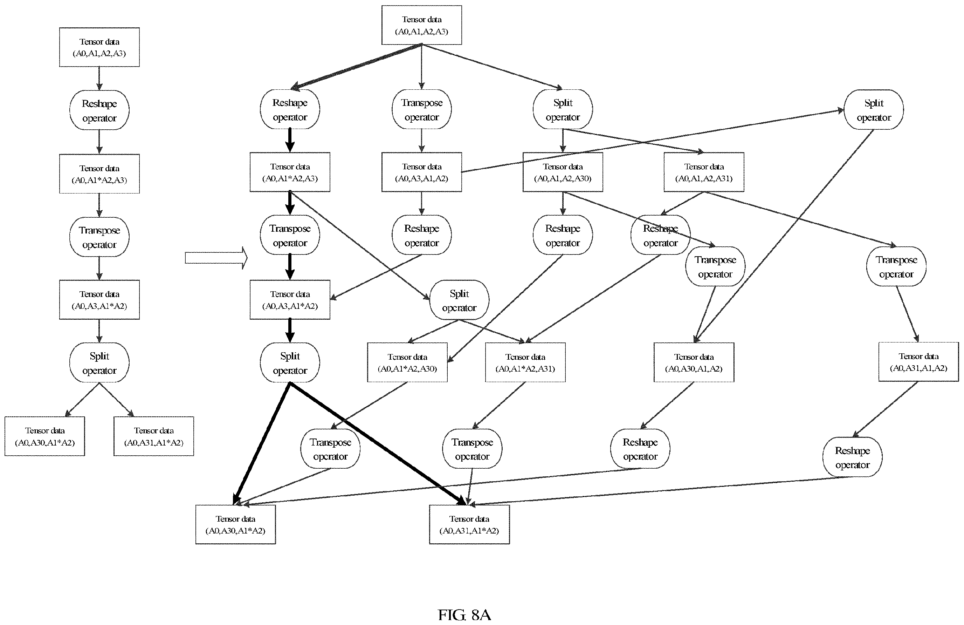

In an embodiment of the present disclosure, based on the equivalence rules described in the present disclosure, the glue subgraph may be expanded to build a number of new operator paths equivalent to the semantics of the glue subgraph. For example, as shown by FIG. 8A, the left side is an original structure of the glue subgraph, where the shape of tensor data (A0, A1, A2, A3) first becomes tensor data (A0, A1*A2, A3) through the reshape operator and then becomes tensor data (A0, A3, A1*A2) through the transpose operator, and finally is split into two sub-tensor data through the split operator. The right side is the glue subgraph expanded according to preset equivalence rules, where the bold part represents original topological relationships in the glue subgraph. It may be known from FIG. 8A that in addition to the original topological relationships in the glue subgraph, there are various different methods to obtain the output tensor data (A0, A30, A1*A2) and (A0, A31, A1*A2) of the original subgraph based on the input tensor data (A0, A1, A2, A3) of the original subgraph.

In an embodiment of the present disclosure, considering the case that after adding the logic relationship equivalent to the semantics of the glue subgraph to the glue subgraph, new operators are added to the subgraph or the connection relationship between the original operators in the subgraph may be changed, in this case, for the new operators and subsequent operators of the operators whose connection relationships have been changed, the method described above may be applied to determine corresponding equivalent logical relationships, and then the equivalent logical relationships may be added to the glue subgraph to obtain the expanded glue subgraph.

In a specific implementation, adding equivalent logic relationships corresponding to at least two glue operators to the glue subgraph may also include: when it is satisfied that the added equivalent logical relationships change original directed edges between the glue operators included in the glue subgraph, according to the changed directed edges between the glue operators in the glue subgraph and the equivalence rules, equivalent logical relationships corresponding to at least two glue operators that are adjacent to each other in the changed glue subgraph may be determined, until the glue subgraph may not be expanded by the equivalence rules.

In an embodiment of the present disclosure, in the case of satisfying the equivalence rules, in the process of adding the logic relationship equivalent to the semantics of the glue subgraph to the glue subgraph.

In a step A211, if a current operator and a previous operator of the current operator are quasi-operations with each other, it means that starting tensor data and ending tensor data of an operator sequence formed by the current operator and the previous operator are the same tensor, in this case, these two tensors may be merged to obtain one tensor.

In a step A212, if the tensor in the glue subgraph or the operator that already exists in the glue subgraph will be added, in this case, the tensor or the operator in the glue subgraph may be directly used.

In a step A213, no repeated operator sequence exists in the expanded glue subgraph.

In an embodiment of the present disclosure, the expanded glue subgraph satisfies a constraint: for a topological structure of any group of operators satisfying the equivalence rules in the glue subgraph, a transformed operator topological structure also exists in the expanded glue subgraph, in other words, the expanded glue subgraph is a closure based on the equivalence rules. This constraint makes it impossible for the expanded glue subgraph to be further expanded by the equivalence rules again, so as to ensure that the expanded glue subgraph already contains as many topological structures of the equivalent logic relationships as possible, which is beneficial to obtain a target subgraph that is optimal for the performance of the artificial intelligence processor from the expanded glue subgraph.

In an embodiment of the present disclosure, through this implementation, it may be ensured that for each glue operator in the glue subgraph, whether it is already in the original glue subgraph or added later, whether at least two glue operators that are adjacent to each other may be optimized according to the equivalence rules may be determined. Then, after the equivalent logic relationship of the at least two glue operators that are adjacent to each other is determined, it may be added to the glue subgraph. Finally, whether the new operator that are added to the glue subgraph and the subsequent operator of the operator whose connection relationship has been changed may be optimized according to the equivalence rules may be determined again, so as to ensure that no new logic relationship introduced due to changes in the structure of the glue subgraph will be missed.

In a step A22, the expanded glue subgraph may be transformed to obtain a state set graph of tensor data associated with the glue operator.

In an embodiment of the present disclosure, any one of paths from the starting state to the ending state in the state set graph of the tensor data associated with the glue operator is used to characterize the reconstructed subgraph. The reconstructed subgraph is the optimization of the glue subgraph.

In an embodiment of the present disclosure, the reason for transforming the expanded glue subgraph is that: the expanded glue subgraph may be used to describe the implementation process of building the equivalent logic relationship of the operator sequence and may not be used to determine the target subgraph based on the expanded glue subgraph.

In a specific implementation, transforming the expanded glue subgraph to obtain the state set graph of the tensor data associated with the glue operator may include:

determining the type of the glue operator in the expanded glue subgraph and the logic relationship between the glue operators in the expanded glue subgraph;

determining corresponding output tensor data according to input tensor data corresponding to the operator in the expanded glue subgraph based on the type of the glue operator in the expanded glue subgraph and the logic relationship between the glue operators in the expanded glue subgraph; and

determining the state set graph of the tensor data associated with the glue operator according to the input tensor data and the output tensor data of the glue operator in the expanded glue subgraph.

In an embodiment of the present disclosure, all tensors in the expanded glue subgraph have a unique number, which is {0, 1, 2, ..., n}. In the subgraph, data of all input tensors may be regarded as a whole D, and the data of D may be split and combined to different tensors, and combination of each tensor may be regarded as a state of D. In the beginning, the state of D may be expressed as a set of the number of all input tensors, which is {s0, s1, ..., sm}, and the final target is to make D become a state {e0,e1,...,en }, where ei is the number of the i-th output tensor. Starting with the input, each glue operator associated with the input tensor may be turn at least one tensor of all tensors corresponding to the current D into another one or more tensors, in other words, a number set representing the state of D has changed, for example, from one number state set to another number state set. Based on this, a graph structure composed of the various states of D and the directed edges before the state represented by the glue operator may be obtained, in other words, the state set graph may be obtained.

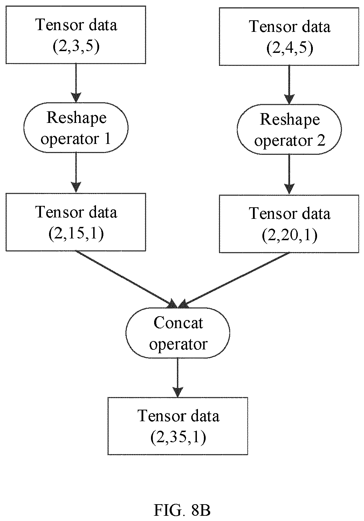

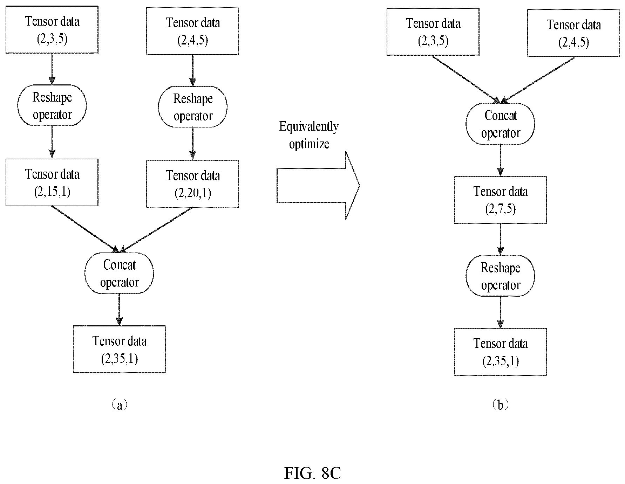

In order to facilitate understanding, the following description will be made in combination with specific embodiments. Referring to FIG. 8B, FIG. 8B is a schematic structural diagram of a glue subgraph according to an embodiment of the present disclosure. As shown by FIG. 8B, the glue subgraph may include two reshape operators and one concat operator. Specifically, tensor data (2, 3, 5) may become tensor data (2, 15, 1) through the reshape operator 1; and tensor data (2, 4, 5) may become tensor data (2, 20, 1) through the reshape operator 2. Additionally, the tensor data (2, 15, 1) and the tensor data (2, 20, 1) may become tensor data (2, 35, 1) through the concat operator. From the above implementation process, it may be known that since at most only one dimension of the input tensors corresponding to the plurality of reshape operators has a different length, in this case, the output tensor data of the concat operator may be used as the input tensor data of the plurality of the reshape operators. Specifically, the determined logic relationship equivalent to the semantics of the glue subgraph may be as shown in FIG. 8C. Then, in this case, the tensor data (2, 3, 5) and the tensor data (2, 4, 5) may become tensor data (2, 7, 5) through the concat operator; and the tensor data (2, 7, 5) may become the tensor data (2, 35, 1) through the reshape operator. Additionally, it needs to be explained that there is no other logic relationships that may be optimized in the glue subgraph.

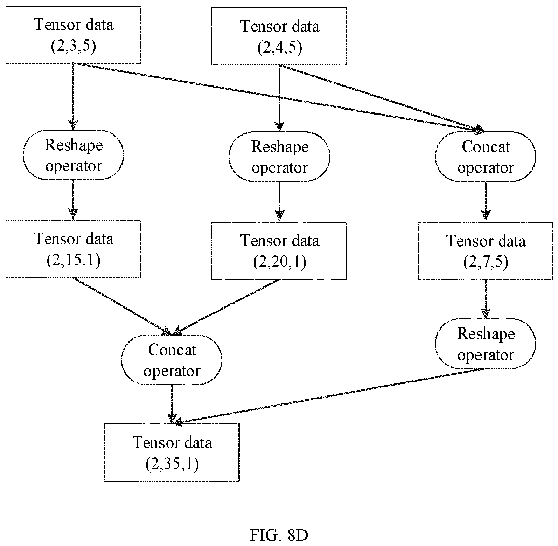

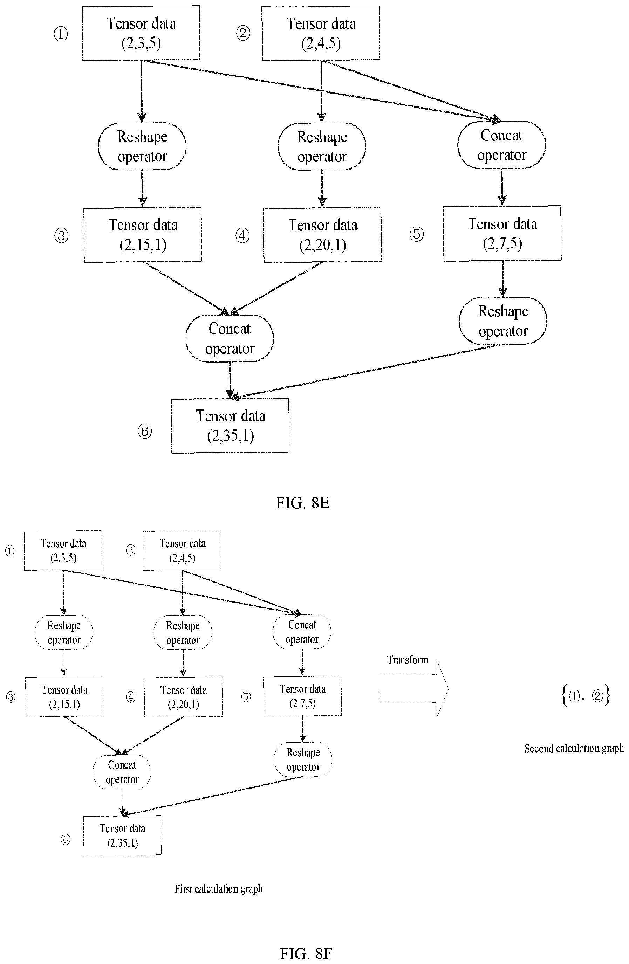

Based on the determined equivalent logic relationship, the computer device may add the above-mentioned equivalent logic relationship to the glue subgraph to obtain the expanded glue subgraph. The specific description is made with reference to FIG. 8D. After obtaining the expanded glue subgraph, the computer device may transform the expanded glue subgraph to obtain the state set graph. In the beginning, the state of D may be expressed as the number set of all input tensors. The specific description is made with reference to FIG. 8E. Specifically, the tensor data (2, 3, 5) is denoted by a number ①, and the tensor data (2, 4, 5) is denoted by a number ②, and the tensor data (2, 15, 1) is denoted by a number ③, and the tensor data (2, 20, 1) is denoted by a number ④, and the tensor data (2, 7, 5) is denoted by a number ⑤, and the tensor data (2, 35, 1) is denoted by a number ⑥. An implementation process of transforming the expanded glue subgraph into the state set graph may be explained in detailed in the following:

in a step 1, starting with the input, the tensor data (2, 3, 5) ① and the tensor data (2, 4, 5) ② constitute a number state set 1 of the input tensor, and specifically, the number state set 1 may be expressed as {①, ②}, and a corresponding transformation graph may be as shown in FIG. 8F;

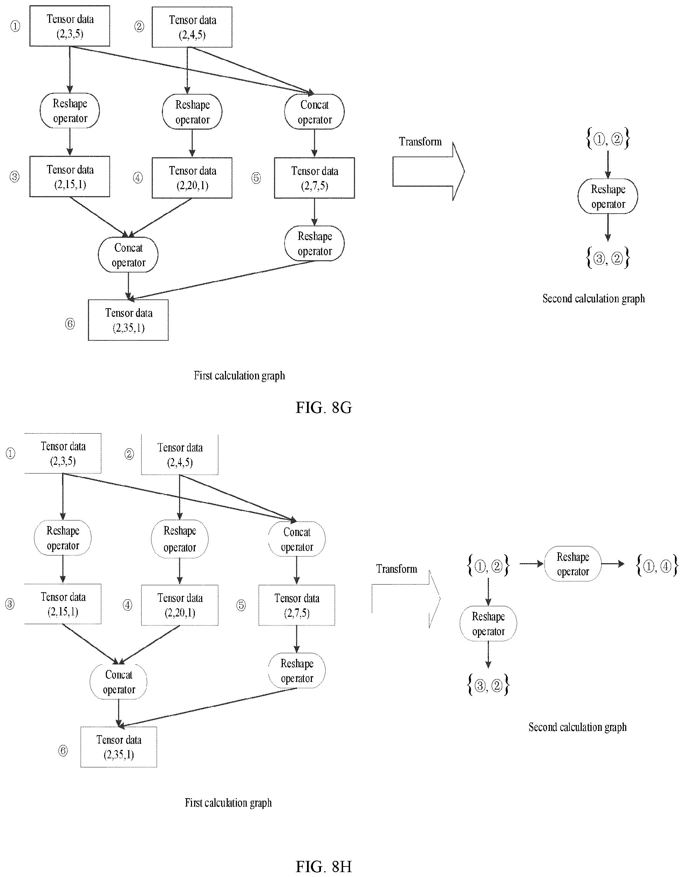

in a step 2, based on the step 1, the reshape operator associated with input tensor data (2, 3, 1) may transform the tensor corresponding to the current D to obtain a number state set 2, and specifically, the number state set 2 may be expressed as {③, ②}, and the corresponding transformation graph may be as shown in FIG. 8G;

in a step 3, based on the step 2, the reshape operator associated with the input tensor data (2, 4, 5) may transform the tensor corresponding to the current D to obtain a number state set 3, and specifically, the number state set 3 may be expressed as {①, ④}, and the corresponding transformation graph may be as shown in FIG. 8H;

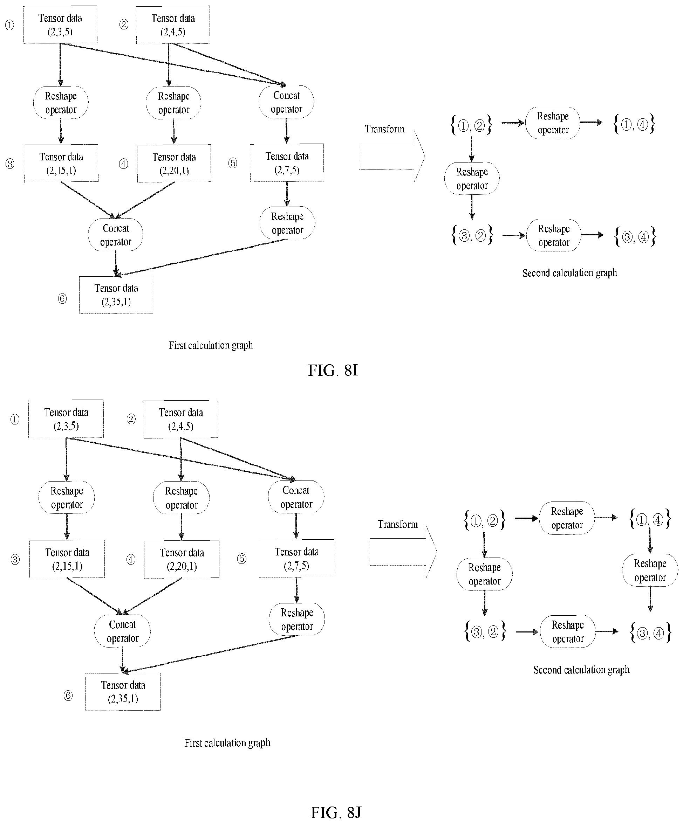

in a step 4, based on the step 3, the reshape operator associated with the input tensor data (2, 4, 5) may transform the tensor corresponding to the current D to obtain a number state set 4, and specifically, the number state set 4 may be expressed as {③, ④}, and the corresponding transformation graph may be as shown in FIG. 8I;

in a step 5, based on the step 4, the reshape operator associated with the input tensor data (2, 3, 5) may transform the tensor corresponding to the current D, and specifically, the number state {①, ④} may be transformed to the number state {③, ④}, and the corresponding transformation graph may be as shown in FIG. 8J;

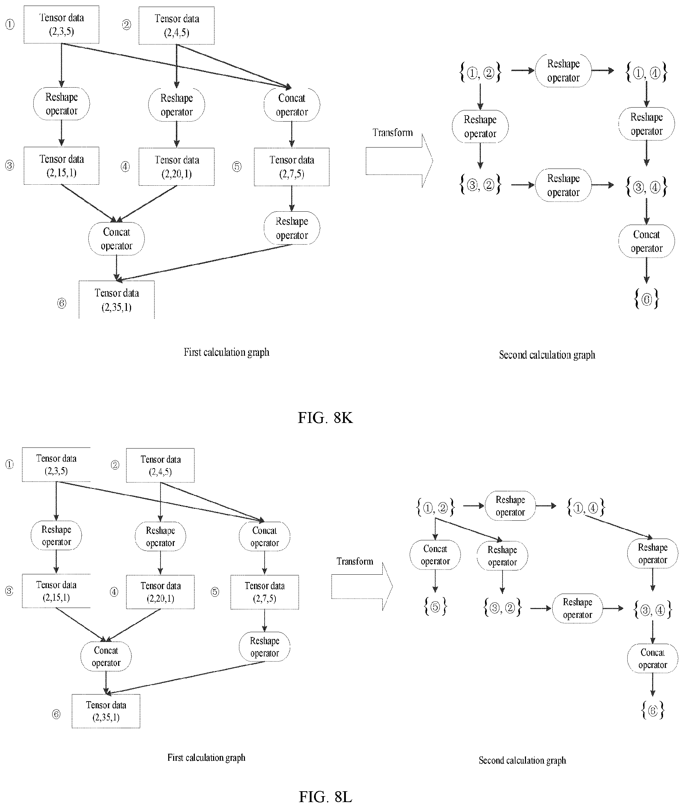

in a step 6, based on the step 5, the concat operator associated with the input tensor data (2, 15, 1) and the input tensor data (2, 20, 1) may transform the tensor corresponding to the current D to obtain a number state set 5, and specifically, the number state set 5 may be expressed as {⑥}, and the corresponding transformation graph may be as shown in FIG. 8K;

in a step 7, based on the step 6, the concat operator associated with the input tensor data (2, 3, 5) and the input tensor data (2, 4, 5) may transform the tensor corresponding to the current D to obtain a number state set 6, and specifically, the number state set 6 may be expressed as {⑤}, and the corresponding transformation graph may be as shown in FIG. 8L;

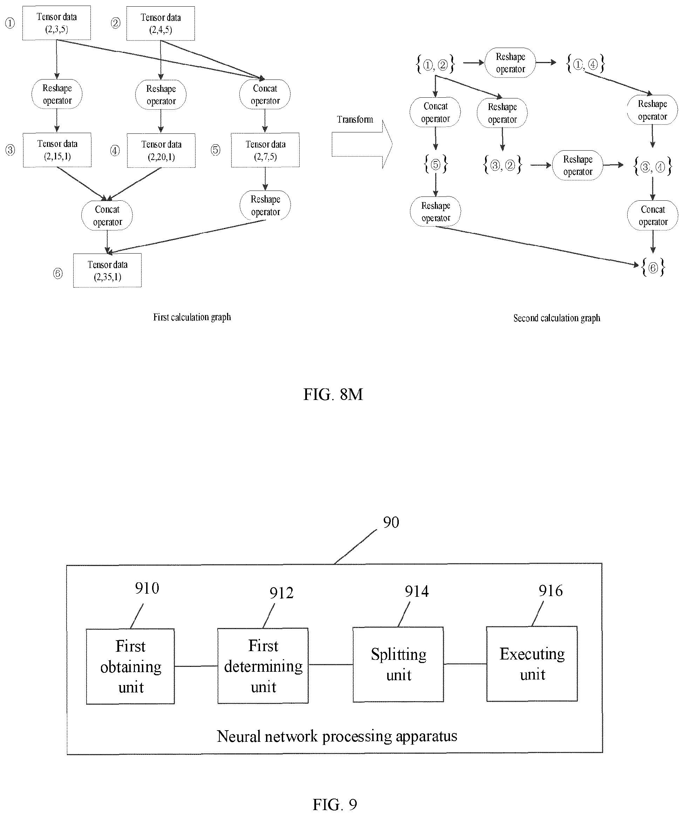

in a step 8, based on the step 7, the reshape operator associated with the input tensor data (2, 7, 5) may transform the tensor corresponding to the current D, and specifically, the number state {⑤} may be transformed to the number state{⑥}, and the corresponding transformation graph may be as shown in FIG. 8M;

In an embodiment of the present disclosure, FIG. 8M is the state set graph obtained after the computer device transforms the expanded glue subgraph. Then, in this case, the target subgraph may be determined in FIG. 8M.

In a step A23, after the state set graph is traversed, the reconstruction result subgraph set may be obtained.

In an embodiment of the present disclosure, after the state set graph is traversed, state paths between adjacent operators and weights of the state paths may be determined.

In an embodiment of the present disclosure, the weights of the state paths are used to characterize the performance of the operator in the execution process. Specifically, for example, if the weights are smaller, the performance of the operator in the execution process is better, and if the weights are larger, the performance of the operator in the execution process is better, which is not limited in the embodiment of the present disclosure. When the weights of the operator are determined, the shape and scale of the input data of the operator may be taken into consideration, For the sake of explanation, in an embodiment of the present disclosure, the case that the smaller the weights, the better the performance will be taken as an example.

In an embodiment of the present disclosure, taking FIG. 8M as an example, the tensor data (2, 3, 5) and the tensor data (2, 4, 5) are the starting states, and the tensor data (2, 35, 1) is the ending state. From FIG. 8M, it may be known that FIG. 8M includes a plurality of paths from the starting state to the ending state. Here, any one of the paths from the starting state to the ending state corresponds to a reconstructed glue subgraph structure that is semantically equivalent. The present disclosure aims to determine the shortest path from the plurality of paths.

Specifically, through traversing the state set graph shown in FIG. 8M, the state paths between adjacent operators and the weights of the state paths may be determined. For example, the state set shown in FIG. 8M includes three paths, including a path 1, a path 2, and a path 3, where the computer device determines that a sum of weights of the operators on the path 1 is 10, and a sum of weights of the operators on the path 2 is 15, and a sum of weights of the operators on the path 3 is 17. Here, the path from the starting state to the ending state is used to characterize the reconstruction result subgraph.

Then, the general purpose processor may determine the target subgraph according to the weights of the state path and optimize the neural network model according to the target subgraph, so as to obtain the optimized neural network model.

In a step S624, the target subgraph may be determined from the reconstruction result subgraph set.

In an embodiment of the present disclosure, determining the target subgraph from the reconstruction result subgraph set may include: determining the target subgraph according to the reconstruction result subgraph with the smallest weight sum in the reconstruction result subgraph set; or determining the target subgraph according to the reconstruction result subgraph whose weight sum is less than a preset threshold value.

In an embodiment of the present disclosure, when the computer device determines the weight sum of each path, the computer device may select the path with the smallest weight sum as the target subgraph from the plurality of paths. For example, if the computer device determines that the sum of weights of the operators on the path 1 is 10, and the sum of weights of the operators on the path 2 is 15, and the sum of weights of the operators on the path 3 is 17, in this case, the computer device may determine the path 1 as the target subgraph, in other words, the computer device may determine the path 1 as a reconstructed subgraph with an optimal performance.

It is required to be noted that the above-mentioned method to obtain the target subgraph is similar to a viterbi algorithm, and the present disclosure is only a partial list of examples, not an exhaustive list. Those skilled in the art may produce other deformations or transformations on the basis of the technical solutions of this present disclosure if they understand the essence of the technical solutions of this present disclosure. For example, a threshold value may be set based on experience, and if the weight of the state path is less than the preset threshold value, the state path may be used as the target subgraph, and the neural network model may be optimized according to the target subgraph. However, as long as functions and technical effects realized by the modifications or variations are similar to those of the present disclosure, the modifications or variations shall fall within the scope of protection of the present disclosure.

In a step S626, the glue subgraph corresponding to the calculation graph may be replaced by the target subgraph to obtain an optimized calculation graph.

As mentioned earlier, for example, if the computer device determines that the sum of weights of the operators on the path 1 is 10, and the sum of weights of the operators on the path 2 is 15, and the sum of weights of the operators on the path 3 is 17, in this case, the computer device may determine the path 1 as the target subgraph. In other words, the computer device may determine the path 1 as the reconstructed subgraph with the optimal performance. At this time, the computer device may replace the original glue subgraph in the neural network model with a subgraph composed of the path 1, so as to realize the optimization on the neural network model to improve the overall performance of the neural network model.

In a step S628, according to the optimized calculation graph, a binary instruction corresponding to the optimized calculation graph may be obtained and the binary instruction may be distributed to a corresponding artificial intelligence processor to execute a task.

In an embodiment of the present disclosure, according to the optimized calculation graph, the general purpose processor may invoke a compiling interface of a set artificial intelligence learning library to compile and obtain the corresponding binary instruction. The corresponding binary instruction is processed by the runtime library to generate machine learning processing tasks. In practical applications, the general purpose processor may place the machine learning processing tasks in the task queue, and finally the driver may schedule the machine learning processing tasks in the task queue and the artificial intelligence processor may execute the tasks to obtain operation results.

In an embodiment of the present disclosure, a machine learning processing task refers to: the neural network model obtains learning ability to complete a certain task. Here, the machine learning processing task may include the image recognition, the edge detection, and the semantic analysis, and the like. Specifically, in order to improve the practicability of the neural network model, different neural network models correspond to different machine learning processing tasks. For example, the machine learning processing tasks corresponding to the deep learning neural network model may be the image classifications and the text classifications; the machine learning processing tasks corresponding to the convolutional neural network model may be the image recognition and the video classifications; the machine learning processing tasks corresponding to the LSTM model may be the speech recognition, the image description and the natural language process.

In an embodiment of the present disclosure, requests of the machine learning processing tasks may be execution instructions input by the user for the neural network model. When the computer device receives requests of machine learning processing tasks, corresponding neural network models may be obtained according to the types of the machine learning processing tasks, and the corresponding neural network models may be run on the artificial intelligence processor, so that the operation results for the machine learning processing tasks may be obtained. It needs to be noted that the neural network model run by the processor (for example, the general purpose processor and the artificial intelligence processor) is the optimized neural network model.

In an embodiment of the present disclosure, an operation result of a machine learning processing task refers to a result when the computer device executes machine learning processing task, which includes but is not limited to: the precision of the neural network model when executing the machine learning processing task, and the runtime of the neural network model when executing the machine learning processing task, and the like. Further optionally, the computer device may output the operation result, in other words, the computer device may display the operation result on the display. It may be understood that since the calculation graph corresponding to the neural network model has been optimized, which means that the original glue subgraph has been replaced by a reconstructed subgraph with a better performance, the overall performance of the neural network model may be improved. Further, the redundant calculations may be reduced when the artificial intelligence processor invokes the optimized neural network model to execute the machine learning processing task and further reduce the resource consumption of the computer device.

Based on the embodiments of the present disclosure, for the glue subgraph including the plurality of glue operators, the computer device may obtain the optimized structure corresponding to the glue subgraph by reconstructing the subgraph, and optimize the neural network model according to the reconstructed subgraph, which may improve the overall performance of the neural network model. Additionally, when the computer device runs the optimized neural network model, the resource consumption of the computer device may be reduced.

It should be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Secondly, those skilled in the art should also understand that the examples described in the specification are all optional, and the actions and modules involved are not necessarily required for this disclosure.

It should be further explained that though the steps in the flowchart of FIG. 6A are shown by following the direction of arrows, yet these steps may not necessarily be performed according to the order indicated by the arrows. Unless clearly stated herein, the order for performing these steps is not strictly restricted. These steps may be performed in a different order. Additionally, at least part of steps shown in FIG. 6A may include a plurality of sub-steps or a plurality of stages. These sub-steps or stages may not necessarily be performed and completed at the same time; instead, these sub-steps or stages may be performed at different time. These sub-steps or stages may not necessarily be performed sequentially either; instead, these sub-steps or stages may be performed in turn or alternately with at least part of other steps, or sub-steps of other steps, or stages.

The foregoing describes the methods of the embodiments of the present disclosure in detail. In order to facilitate better implementation of the above solutions of the embodiments of the present disclosure, correspondingly, related apparatuses for cooperating with the implementation of the foregoing solutions are also provided below.

Referring to FIG. 9, FIG. 9 is a schematic structural diagram of a neural network processing apparatus according to an embodiment of the present disclosure. An apparatus 90 may at least include:

a first obtaining unit 910 configured to obtain a calculation graph corresponding to a neural network model, where the neural network model may include a plurality of operators;

a first determining unit 912 configured to determine a target splitting policy of a neural network calculation task in a splitting policy set, where the splitting policy set is a set composed of splitting policies corresponding to target operators in the calculation graph;

a splitting unit 914 configured to split the neural network calculation task according to the target splitting policy to obtain a plurality of sub-calculation tasks; and

an executing unit 916 configured to respectively invoke the plurality of sub-calculation tasks on M artificial intelligence processor cores to obtain a operation result.

In a possible implementation, the apparatus 90 may also include:

a second determining unit 918 configured to determine a splitting policy corresponding to a target operator according to a degree of parallelism, a splitting dimension, and a size of the splitting dimension corresponding to the target operator in the calculation graph; and

a third determining unit 920 configured to determine the splitting policy set according to the splitting policies corresponding to the target operators.

In a possible implementation, the third determining unit 920 may be specifically configured to:
determine an intersection of splitting policies supported by each target operator as the splitting policy set.

In a possible implementation, the first determining unit 912 may include a first determining sub-unit and a second determining sub-unit, where

the first determining sub-unit is configured to determine weight values corresponding to the splitting policies corresponding to the target operators in the splitting policy set respectively; and

the second determining sub-unit is configured to determine the target splitting policy according to the weight values.

In a possible implementation, a weight value is determined according to an operational type of the target operator included in a split policy, a data scale involved in the target operator, and hardware parameters of a multi-core processor.

In a possible implementation, the apparatus 90 may also include:

a second obtaining unit configured to obtain the operational type of the target operator; and

a fourth determining unit 924 configured to determine the splitting policy of the target operator according to the operation type of the target operator.

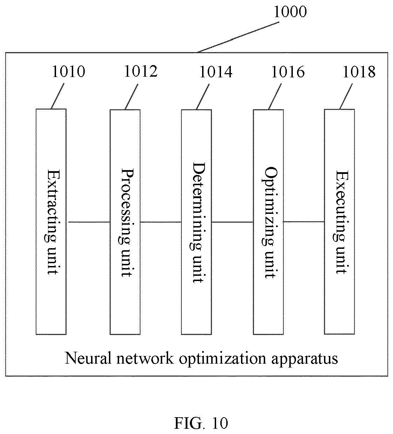

In a possible embodiment, referring to FIG. 10, FIG. 10 is a schematic structural diagram of a neural network optimization apparatus according to an embodiment of the present disclosure. An apparatus 1000 may at least include:

an extracting unit 1010 configured to extract a glue subgraph from a calculation graph corresponding to a neural network model, where the glue subgraph is a subgraph including a glue operator, and the glue operator is used to adjust tensor data of the calculation graph;

a processing unit 1012 configured to, in the case of ensuring that input tensor data and output tensor data of the glue subgraph remain unchanged, process the glue subgraph in the calculation graph to obtain a reconstruction result subgraph set, where input tensor data and output tensor data of any one of reconstruction result subgraphs in the reconstruction result subgraph set are the same as those of the glue subgraph respectively;

a determining 1014 configured to determine a target subgraph from the reconstruction result subgraph set;

an optimizing unit 1016 configured to replace the glue subgraph corresponding to the calculation graph with the target subgraph to obtain an optimized calculation graph; and

an executing unit 1018 configured to obtain a binary instruction corresponding to the optimized calculation graph, so as to distribute the binary instruction to a corresponding artificial intelligence processor to execute a task.

In a possible implementation, the processing unit 1012 may include an expanding unit, a transforming unit and a traversing unit, where

the expanding unit is configured to expand the glue subgraph according to a logic relationship of the glue operator to obtain an expanded glue subgraph; the transforming unit is configured to transform the expanded glue subgraph to obtain a state set graph of tensor data associated with the glue operator; and the traversing unit is configured to traverse the state set graph to obtain the reconstruction result subgraph set.

In a possible implementation, the expanding unit may include a first expanding unit and a second expanding unit, where

the first expanding unit is configured to expand a logic relationship between glue operators in the glue subgraph according to equivalence rules to obtain a logic relationship equivalent to semantics of the glue subgraph; and the second expanding unit is configured to expand the glue subgraph according to the logic relationship equivalent to the semantics of the glue subgraph to obtain the expanded glue subgraph.

In a possible implementation, the equivalence rules may include at least one of the equivalence rules of reshape operators, the equivalence rules of transpose operators, the equivalence rules of concat operators, and the equivalence rules of split operators.

In a possible implementation, the first expanding unit is specifically configured to: transform an operator sequence corresponding to the logic relationship and ensure that all logic relationships equivalent to the semantics of the glue subgraph may be obtained according to the equivalence rules.

In a possible implementation, the transforming unit is specifically configured to: determine a type of the glue operator in the expanded glue subgraph and the logic relationship between the glue operators; and based on the type of the glue operator in the expanded glue subgraph and the logic relationship between the glue operators, determine corresponding output tensor data according to input tensor data corresponding to the glue operator in the expanded glue subgraph; and determine the state set graph of the tensor data associated with the glue operator according to the input tensor data and the output tensor data of the glue operator in the expanded glue subgraph.

In a possible implementation, the determining unit is specifically configured to: determine a reconstruction result subgraph with the smallest weight sum in the reconstruction result subgraph set as the target subgraph; or determine a reconstruction result subgraph whose weight sum is less than a preset threshold value in the reconstruction result subgraph set as the target subgraph.

It should be understood that the foregoing apparatus embodiments are only illustrative, and the apparatus of the present disclosure may also be implemented in other ways. For example, a division of units/modules in the foregoing embodiment is only a logical function division, and there may be other division methods in actual implementations. For example, a plurality of units, modules, or components may be combined or integrated into another system, or some features may be omitted or not implemented.

The units or modules described as separation components may or may not be physically separated. The components described as units or modules may or may not be physical units; in other words, the components may be located in one apparatus, or may be distributed on a plurality of apparatuses. The solutions of the embodiments of the present disclosure may be implemented by selecting some or all of the units according to actual needs.

Additionally, here, it is required to be noted that the embodiments of the present disclosure also provide a computer storage medium for storing computer software instructions used by the computer device shown in FIG. 2 above, which includes a program for executing the above method embodiments. By executing the stored program, the neural network model processing may be realized, so as to make full use of multi-core processing resources.

The above-mentioned embodiments of the present disclosure provide a neural network processing method, a neural network processing device, a computer device and a storage medium. According to the neural network processing method, by splitting a neural network calculation task into a plurality of sub-calculation tasks with smaller scales, a calculation library under a single-core structure may be invoked by a multi-core processor directly, thereby making full use of hardware resources of the multi-core processor and avoiding extra workloads brought by reimplementation.

Those skilled in the art should understand that the embodiments of the present disclosure may be provided as a method, a system, or a computer program product. Therefore, the present disclosure may be implemented wholly in the form of hardware, or wholly in the form of software, or in the form of combining software and hardware. In addition, the present disclosure may be realized in the form that a computer program product is implemented by using one or more computer-usable storage media (which include but are not limited to a disk storage and an optical storage) that store computer-usable program codes.

The present disclosure is described according to flowcharts and/or block diagrams of a method, a device (a system), and a computer program product of the embodiments of the present disclosure. It should be understood that each step and/or block of the flowcharts and/or the block diagrams, and a combination of a step and/or block of the flowcharts and/or the block diagrams may be realized by the computer program instructions. A computer program instruction may be provided to the processor of a general-purpose computer, a special-purpose computer, an embedded computer, or another programmable data processing device for generating a machine, so that the processor of the computer or the other programmable data processing device may execute the instruction to generate an apparatus for realizing a specified function of a step or a plurality of steps in the flowcharts and/or one or more blocks in the block diagrams.

These computer program instruction may also be stored in a computer-readable memory that may direct the computer or the other programmable data processing device to work in a particular manner, so that the instructions stored in the computer readable memory may produce a product including an instruction device. The instruction device may implement functions specified in one or more steps in the flowcharts and/or one or more blocks of the block diagrams.

These computer program instructions may also be loaded onto the computer or the other programmable data processing device, so that a series of operational steps may be performed on the computer or the other programmable device to generate computer-implemented processing. In this way, instructions to be executed by the computer or the other programmable device may provide steps of the functions specified in one or more steps in the flowcharts and/or one or more blocks of the block diagrams.

Furthermore, the foregoing may be better understood according to the following articles.

Article A1. A neural network processing method applied to an artificial intelligence processor, where the artificial intelligence processor includes M artificial intelligence processor cores, where M is a positive integer greater than 1, comprising:

obtaining a calculation graph corresponding to a neural network model, where the neural network model includes a plurality of operators;
determining a target splitting policy of a neural network calculation task in a splitting policy set, where the splitting policy set is a set composed of splitting policies corresponding to target operators in the calculation graph;
splitting the neural network calculation task according to the target splitting policy to obtain a plurality of sub-calculation tasks; and
distributing the plurality of sub-calculation tasks to corresponding artificial intelligence processor cores in the artificial intelligence processor for processing.

Article A2. The method of article A1, after the calculation graph corresponding to the neural network model is obtained and before the target splitting policy of the neural network calculation task in the splitting policy set is determined, further comprising:

determining a splitting policy corresponding to a target operator according to a degree of parallelism, a splitting dimension, and a size of the splitting dimension corresponding to the target operator in the calculation graph; and
determining the splitting policy set according to the splitting policies corresponding to the target operators.

Article A3. The method of article A2, where determining the splitting policy set according to the splitting policies corresponding to the target operators includes:
determining an intersection of splitting policies supported by each target operator as the splitting policy set.

Article A4. The method of article A1, where determining the target splitting policy of the neural network calculation task in the splitting policy set includes:

determining weight values of the splitting policies corresponding to the target operators in the splitting policy set respectively; and
determining the target splitting policy according to the weight values.

Article A5. The method of article A4, where a weight value is determined according to an operational type of the target operator included in a splitting policy, a data scale involved in the target operator, and hardware parameters of a multi-core processor.

Article A6. The method of any one of articles A1-A4, further comprising:

obtaining the operational type of the target operator; and
determining the splitting policy of the target operator according to the operational type of the target operator.

Article A7. The method of article A2, where the degree of parallelism corresponding to the target operator includes a first degree of parallelism or a second degree of parallelism.

Article A8. The method of article A2, where the degree of parallelism corresponding to the target operator includes a first degree of parallelism or a second degree of parallelism, where a result of multiplying the first degree of parallelism by the second degree of parallelism is less than or equal to a count of artificial intelligence processor cores in the artificial intelligence processor.

Article B1. A neural network processing apparatus applied to an artificial intelligence processor, where the artificial intelligence processor includes M artificial intelligence processor cores, where M is a positive integer greater than 1, comprising:

a first obtaining unit configured to obtain a calculation graph corresponding to a neural network model, where the neural network model includes a plurality of operators;
a first determining unit configured to determine a target splitting policy of a neural network calculation task in a splitting policy set, where the splitting policy set is a set composed of splitting policies corresponding to target operators in the calculation graph;
a splitting unit configured to split the neural network calculation task according to the target splitting policy to obtain a plurality of sub-calculation tasks; and
an executing unit configured to distribute the plurality of sub-calculation tasks to corresponding artificial intelligence processor cores in the artificial intelligence processor for processing.

Article B2. The apparatus of article B1, further comprising:

a second determining unit configured to determine a splitting policy corresponding to a target operator according to a degree of parallelism, a splitting dimension, and a size of the splitting dimension corresponding to the target operator in the calculation graph; and
a third determining unit configured to determine the splitting policy set according to the splitting policies corresponding to the target operators.

Article B3. The apparatus of article B2, where the third determining unit is specifically configured to: determine an intersection of splitting policies supported by each target operator as the splitting policy set.

Article B4. The apparatus of article B1, where the first determining unit includes a first determining sub-unit and a second determining sub-unit;

the first determining sub-unit is configured to determine weight values of the splitting policies corresponding to the target operators in the splitting policy set respectively; and
the second determining sub-unit is configured to determine the target splitting policy according to the weight values.

Article B5. The apparatus of article B4, where a weight value is determined according to an operational type of the target operator included in a splitting policy, a data scale involved in the target operator, and hardware parameters of a multi-core processor.

Article B6. The apparatus of any one of articles B1-B4, further comprising:

a second obtaining unit configured to obtain the operational type of the target operator; and
a fourth determining unit configured to determine the splitting policy of the target operator according to the operational type of the target operator.

Article C1. A computer device comprising processors and a memory that are connected to each other, where the processors include a general-purpose processor and an artificial intelligence processor, the memory is configured to store a computer program, the computer program includes a program instruction, and the processors are configured to invoke the program instruction to perform the method of any one of articles A1-A8.

Article D1. A computer-readable storage medium, on which a computer program is stored, where the computer program includes a program instruction, and the program instruction enables a processor to perform the method of any one of articles A1-A8 when executed by the processor.

The embodiments of the present disclosure have been described in detail above. Specific examples have been used in the specification to explain principles and implementations of the present disclosure. The descriptions of the embodiments above are only used to facilitate understanding of the method and core ideas of the present disclosure. Simultaneously, persons of ordinary skill in the art may change or transform specific implementations and application scope of the present disclosure according to the ideas of the present disclosure. The changes and transformations shall all fall within the protection scope of the present disclosure. In summary, the content of this specification should not be construed as a limitation on the present disclosure.

**Claims**

1.   A neural network processing method applied to an artificial intelligence processor, wherein the artificial intelligence processor includes M artificial intelligence processor cores, wherein M is a positive integer greater than 1, comprising:

obtaining a calculation graph corresponding to a neural network model, wherein the calculation graph includes a plurality of operators;
determining a target splitting policy of a neural network calculation task in a splitting policy set, wherein the splitting policy set is a set composed of splitting policies corresponding to target operators in the calculation graph;
splitting the neural network calculation task according to the target splitting policy to obtain a plurality of sub-calculation tasks; and
distributing the plurality of sub-calculation tasks to corresponding artificial intelligence processor cores in the artificial intelligence processor for processing.

2.   The method of claim 1, after the calculation graph corresponding to the neural network model is obtained and before the target splitting policy of the neural network calculation task in the splitting policy set is determined, further comprising:

determining a splitting policy corresponding to a target operator according to a degree of parallelism, a splitting dimension, and a size of the splitting dimension corresponding to the target operator in the calculation graph; and
determining the splitting policy set according to the splitting policies corresponding to the target operators.

3.   The method of claim 2, wherein determining the splitting policy set according to the splitting policies corresponding to the target operators includes:
determining an intersection of splitting policies supported by each target operator as the splitting policy set.

4.   The method of claim 1, wherein determining the target splitting policy of the neural network calculation task in the splitting policy set includes:

determining weight values of the splitting policies corresponding to the target operators in the splitting policy set respectively; and
determining the target splitting policy according to the weight values.

5.   The method of claim 4, wherein a weight value is determined according to an operational type of the target operator included in a splitting policy, a data scale involved in the target operator, and hardware parameters of a multi-core processor.

6.   The method of any one of claims 1-5, further comprising:

obtaining the operational type of the target operator; and
determining the splitting policy of the target operator according to the operational type of the target operator.

7.   The method of claim 2, wherein the degree of parallelism corresponding to the target operator includes a first degree of parallelism or a second degree of parallelism.

8.   The method of claim 2, wherein the degree of parallelism corresponding to the target operator includes a first degree of parallelism or a second degree of parallelism, wherein a result of multiplying the first degree of parallelism by the second degree of parallelism is less than or equal to a count of artificial intelligence processor cores in the artificial intelligence processor.

9. A neural network processing apparatus applied to an artificial intelligence processor, wherein the artificial intelligence processor includes M artificial intelligence processor cores, wherein M is a positive integer greater than 1, comprising:

a first obtaining unit configured to obtain a calculation graph corresponding to a neural network model, wherein the neural network model includes a plurality of operators;
a first determining unit configured to determine a target splitting policy of a neural network calculation task in a splitting policy set, wherein the splitting policy set is a set composed of splitting policies corresponding to target operators in the calculation graph;
a splitting unit configured to split the neural network calculation task according to the target splitting policy to obtain a plurality of sub-calculation tasks; and
an executing unit configured to distribute the plurality of sub-calculation tasks to corresponding artificial intelligence processor cores in the artificial intelligence processor for processing.

10. The apparatus of claim 9, further comprising:

a second determining unit configured to determine a splitting policy corresponding to a target operator according to a degree of parallelism, a splitting dimension, and a size of the splitting dimension corresponding to the target operator in the calculation graph; and
a third determining unit configured to determine the splitting policy set according to the splitting policies corresponding to the target operators.

11. The apparatus of claim 10, wherein the third determining unit is specifically configured to:
determine an intersection of splitting policies supported by each target operator as the splitting policy set.

12. The apparatus of claim 9, wherein the first determining unit includes a first determining sub-unit and a second determining sub-unit;

the first determining sub-unit is configured to determine weight values of the splitting policies corresponding to the target operators in the splitting policy set respectively; and
the second determining sub-unit is configured to determine the target splitting policy according to the weight values.

13. The method of claim 12, wherein a weight value is determined according to an operational type of the target operator included in a splitting policy, a data scale involved in the target operator, and hardware parameters of a multi-core processor.

14. The apparatus of of any one of claims 9-13, further comprising:

a second obtaining unit configured to obtain the operational type of the target operator; and
a fourth determining unit configured to determine the splitting policy of the target operator according to the operational type of the target operator.

15. The method of claim 10, wherein the degree of parallelism corresponding to the target operator includes a first degree of parallelism or a second degree of parallelism.

16. A chip integrating the neural network processing apparatus of any one of claims 9-15.

17. A computer device comprising the chip of claim 16 or the neural network processing apparatus of any one of claims 9-15.

18. A computer device comprising processors and a memory that are connected to each other, wherein the processors include a general-purpose processor and an artificial intelligence processor, the memory is configured to store a computer program, the computer program includes a program instruction, and the processors are configured to invoke the program instruction to perform the method of any one of claims 1-8.

19. A computer-readable storage medium, on which a computer program is stored, wherein the computer program includes a program instruction, and the program instruction enables a processor to perform the method of any one of claims 1-8 when executed by the processor.

**20.** A computer program product comprising a non-transitory computer-readable storage medium on which a computer program is stored, wherein the computer program is operated to enable a computer to perform the method of any one of claims 1-8.

FIG. 1A

FIG. 1B

| a16 | a17 | a18 | a19 |
|-----|-----|-----|-----|
|     | a20 | a21 | a22 | a23 |
| a8 | a9 | a10 | a11 |
|    | a12 | a13 | a14 | a15 |
| a0 | a1 | a2 | a3 |
| a4 | a5 | a6 | a7 |

(3,2,4)

Transpose

| a3 | a11 | a19 |
|-----|-----|-----|
| a7 | a15 | a23 |
| a2 | a10 | a18 |
| a6 | a14 | a22 |
| a1 | a9 | a17 |
| a5 | a13 | a21 |
| a0 | a8 | a16 |
| a4 | a12 | a20 |

(4,2,3)

FIG. 1C

co

c1

c2

Concat

C=c0+c1+c2

FIG. 1D

C=c0+c1+c2

Split

co

c1

c2

FIG. 1E

Storage space

| $I_0$ | $I_1$ | $I_2$ | $I_3$ | $I_4$ | $I_5$ | $I_6$ | $I_7$ | $I_8$ | $I_9$ | $I_{10}$ | $I_{11}$ | $I_{12}$ | $I_{13}$ | $I_{14}$ | $I_{15}$ |
|---|---|---|---|---|---|---|---|---|---|---|---|---|---|---|---|
| | | | | | | | | | | | | | | | |

FIG. 1F

Semantic process: N,C,H,W $\xrightarrow{\text{Transpose}(0,2,3,1)}$ N,H,W,C $\xrightarrow{\text{Reshape}(N,CHW,1,1)}$ N,HWC,1,1

Actual process:

N,C,H,W $\xrightarrow{\text{Transpose}(0,2,3,1)}$ N,H,W,C

$\phi$ ↑     $\hat{\phi}$ ↓

N,C,W,H     N,H,C,W

N,H,W,C $\xrightarrow{\text{Reshape}(N,CHW,1,1)}$ N,HWC,1,1

$\phi$ ↑     $\hat{\phi}$ ↓

N,HWC,1,1

$\phi$ : transpose(0,1,3,2)    $\hat{\phi}$ : transpose(0,1,3,2)

Ensure equivalence of operations

FIG. 1G

W, H

| a0 | a1 | a2 | a3 | 0 | 0 |
| a4 | a5 | a6 | a7 | 0 | 0 |
| a8 | a9 | a10 | a11 | 0 | 0 |

stride_h=6

| a0 | a1 | a2 | a3 | 0 | 0 | a4 | a5 | a6 | a7 | 0 | 0 | a8 | a9 | a10 | a11 | 0 | 0 |

stride_w=1

Memory distribution with strides

FIG. 1H

100     Artificial intelligence application

102     Artificial intelligence framework

104     Artificial intelligence learning library

106     Artificial intelligence runtime library

108     Driver

FIG. 1I

201            205

Processor        Artificial intelligence processor

203

Memory     202       Communication interface    204

Computer device

FIG. 2

Obtain a calculation graph corresponding to a neural network model, where the neural network model includes a plurality of operators

S310

Determine a target splitting policy of a neural network calculation task in a splitting policy set, where the splitting policy set is a set composed of splitting policies corresponding to target operators in the calculation graph

S312

Split the neural network calculation task according to the target splitting policy to obtain a plurality of sub-calculation tasks

S314

Distribute the plurality of sub-calculation tasks to corresponding artificial intelligence processor cores in an artificial intelligence processor for processing

S316

FIG. 3A

| Convolutional layer    conv_1 |

| Pooling layer          pool_1 |

| Convolutional layer    conv_2 |

| Pooling layer          pool_2 |

| Fully-connected layer 1 |

| Fully-connected layer 2 |

FIG. 3B

Convolutional layer    conv_1

↓

Activation function    Relu

↓

Largest pooling layer    pool_1

↓

Convolutional layer    conv_2

↓

Activation function    Relu

↓

Largest pooling layer    pool_2

↓

Convolutional layer    conv_3

↓

Activation function    Relu

↓

Largest pooling layer    pool_3

→

Convolutional layer    conv_4

↓

Activation function    Relu

↓

Largest pooling layer    pool_4

↓

Convolutional layer    conv_5

↓

Activation function    Relu

↓

Largest pooling layer    pool_5

↓

Fully-connected layer    fc_1

↓

Softmax    classifier

↓

Output layer

FIG. 3C

Input
[0,n]
[0,ic]
[0,ih]
[0,iw]

Weight
[0,oc]
[0,ic]
[0,kh]
[0,kw]

Convolutional
operator

Output
[0,n]
[0,oc]
[0,oh]
[0,ow]

FIG. 4

Input
[0,n/2]
[0,ic/2]
[0,ih]
[0,iw]

Input
[n/2,n]
[ic/2,ic]
[0,ih]
[0,iw]

Weight
[0,oc]
[0,ic]
[0,kh]
[0,kw]

Convolutional
operator

Convolutional
operator

Part of
output
[0,n/2]
[0,oc]
[0,oh]
[0,ow]

Part of
output
[n/2,n]
[0,oc]
[0,oh]
[0,ow]

FIG. 5A

| Input<br>[0,n]<br>[0,ic]<br>[0,ih]<br>[0,iw] | Weight<br>[0,oc/2]<br>[0,ic]<br>[0,kh]<br>[0,kw] | Weight<br>[oc/2,oc]<br>[0,ic]<br>[0,kh]<br>[0,kw] |
|---|---|---|

Convolutional operator  Convolutional operator

| Part of<br>output<br>[0,n]<br>[0,oc/2]<br>[0,oh]<br>[0,ow] | Part of<br>output<br>[0,n]<br>[oc/2,oc]<br>[0,oh]<br>[0,ow] |
|---|---|

FIG. 5B

FIG. 5C

| Input<br>[0,n]<br>[0,ic]<br>[0,ih/2]<br>[0,iw] | Input<br>[0,n]<br>[ic,ic]<br>[ih/2,ih]<br>[0,iw] | Weight<br>[0,oc]<br>[0,ic]<br>[0,kh]<br>[0,kw] |

Convolutional operator     Convolutional operator

| Part of<br>output<br>[0,n]<br>[0,oc]<br>[0,oh/2]<br>[0,ow] | Part of<br>output<br>[0,n]<br>[0,oc]<br>[oh/2,oh]<br>[0,ow] |

FIG. 5D

| Input<br>[0,n]<br>[0,ic]<br>[0,ih]<br>[0,iw/2] | Input<br>[0,n]<br>[ic,ic]<br>[ih,ih]<br>[iw/2,iw] | Weight<br>[0,oc]<br>[0,ic]<br>[0,kh]<br>[0,kw] |

Convolutional operator     Convolutional operator

| Part of<br>output<br>[0,n]<br>[0,oc]<br>[0,oh/2]<br>[0,ow] | Part of<br>output<br>[0,n]<br>[0,oc]<br>[oh/2,oh]<br>[0,ow] |

FIG. 5E

Extract a glue subgraph from a calculation graph corresponding to a neural network model, where the glue subgraph is a subgraph including a glue operator, and the glue operator is used to adjust tensor data of the calculation graph
S620

In the case of ensuring that input tensor data and output tensor data of the glue subgraph remain unchanged, process the glue subgraph in the calculation graph to obtain a reconstruction result subgraph set, where input tensor data and output tensor data of any one of reconstruction result subgraphs in the reconstruction result subgraph set are the same as input tensor data and output tensor data of the glue subgraph respectively
S622

Determine a target subgraph from the reconstruction result subgraph set
S624

Replace the glue subgraph corresponding to the calculation graph with the target subgraph to obtain an optimized calculation graph
S626

Obtain a binary instruction corresponding to the optimized calculation graph according to the optimized calculation graph, so as to distribute the binary instruction to a corresponding artificial intelligence processor to execute a task
S628

FIG. 6A

FIG. 6B

FIG. 7A

FIG. 7B

FIG. 7C

FIG. 7D

Reshape

↓

Transpose

Optimize ⟹

Reshape

↓

Transpose

①　　②

Transpose　　Transpose

↓　　↓

Reshape　　Reshape

↓

Transpose

（a）

（b）

FIG. 7E

Concat

↓

Transpose

（a）

Optimize ⟹

Concat

↓

Transpose

Transpose　　Transpose

Concat

（b）

FIG. 7F

Split

Optimize

Split

Transpose　　Transpose

Transpose　　Transpose

Transpose

Transpose

Split

（a）

（b）

FIG. 7G

Transpose

Optimize

Transpose

Transpose

Transpose

Transpose

（a）

（b）

FIG. 7H

FIG. 7I

FIG. 7J

Split

Optimize

Split

Concat

Concat

∅

（a）

（b）

FIG. 7K

Concat

Concat

Optimize

Concat

Concat

Concat

（a）

Concat

（b）

FIG. 7L

Reshape

Split

（a）

Optimize ⟹

Reshape

Split

Split

Reshape

（b）

FIG. 7M

Transpose

Split

（a）

Optimize ⟹

Transpose

Split

Split

Transpose

（b）

FIG. 7N

FIG. 7O

FIG. 7P

Tensor data
(A0,A1,A2,A3)

Tensor data
(A0,A1,A2,A3)

Reshape
operator

Reshape
operator

Transpose
operator

Split
operator

Split
operator

Tensor data
(A0,A1*A2,A3)

Tensor data
(A0,A1*A2,A3)

Tensor data
(A0,A3,A1,A2)

Tensor data
(A0,A1,A2,A30)

Tensor data
(A0,A1,A2,A31)

Transpose
operator

Transpose
operator

Reshape
operator

Reshape
operator

Reshape
operator

Tensor data
(A0,A3,A1*A2)

Tensor data
(A0,A3,A1*A2)

Split
operator

Transpose
operator

Transpose
operator

Split
operator

Split
operator

Tensor data
(A0,A1*A2,A30)

Tensor data
(A0,A1*A2,A31)

Tensor data
(A0,A30,A1,A2)

Tensor data
(A0,A31,A1,A2)

Tensor data
(A0,A30,A1*A2)

Tensor data
(A0,A31,A1*A2)

Transpose
operator

Transpose
operator

Reshape
operator

Reshape
operator

Tensor data
(A0,A30,A1*A2)

Tensor data
(A0,A31,A1*A2)

FIG. 8A

FIG. 8B

FIG. 8C

Tensor data
(2,3,5)

Tensor data
(2,4,5)

Reshape
operator

Reshape
operator

Concat
operator

Tensor data
(2,15,1)

Tensor data
(2,20,1)

Tensor data
(2,7,5)

Concat
operator

Reshape
operator

Tensor data
(2,35,1)

FIG. 8D

① Tensor data (2,3,5)
② Tensor data (2,4,5)

Reshape operator
Reshape operator
Concat operator

③ Tensor data (2,15,1)
④ Tensor data (2,20,1)
⑤ Tensor data (2,7,5)

Concat operator

Reshape operator

⑥ Tensor data (2,35,1)

FIG. 8E

① Tensor data (2,3,5)
② Tensor data (2,4,5)

Reshape operator
Reshape operator
Concat operator

③ Tensor data (2,15,1)
④ Tensor data (2,20,1)
⑤ Tensor data (2,7,5)

Concat operator

Reshape operator

⑥ Tensor data (2,35,1)

First calculation graph

Transform

{①, ②}

Second calculation graph

FIG. 8F

FIG. 8G

FIG. 8H

FIG. 8I

FIG. 8J

FIG. 8K

FIG. 8L

① Tensor data (2,3,5)  ② Tensor data (2,4,5)

Reshape operator  Reshape operator  Concat operator

③ Tensor data (2,15,1)  ④ Tensor data (2,20,1)  ⑤ Tensor data (2,7,5)

Concat operator  Reshape operator

⑥ Tensor data (2,35,1)

First calculation graph

Transform

{①, ②} → Reshape operator → {①, ④}

Concat operator  Reshape operator  Reshape operator

{⑤}  {③, ②} → Reshape operator → {③, ④}

Reshape operator  Concat operator

{⑥}

Second calculation graph

FIG. 8M

90

| 910 | 912 | 914 | 916 |
|---|---|---|---|
| First obtaining unit | First determining unit | Splitting unit | Executing unit |

Neural network processing apparatus

FIG. 9

1000

1010    1012    1014    1016    1018

Extracting unit | Processing unit | Determining unit | Optimizing unit | Executing unit

Neural network optimization apparatus

FIG. 10

## INTERNATIONAL SEARCH REPORT

| | International application No. |
|---|---|
| | **PCT/CN2020/116933** |

**A. CLASSIFICATION OF SUBJECT MATTER**

G06N 3/063(2006.01)i

According to International Patent Classification (IPC) or to both national classification and IPC

**B. FIELDS SEARCHED**

Minimum documentation searched (classification system followed by classification symbols)

G06N 3

Documentation searched other than minimum documentation to the extent that such documents are included in the fields searched

Electronic data base consulted during the international search (name of data base and, where practicable, search terms used)

CNABS, CNKI, DWPI, SIPOABS, IEEE: 神经网络, 算子, 运算, 层, 拆分, 任务, 多, 核, 处理器, neural network, operator, operation, layer, split, task, multiple, core, processor, CPU, GPU

**C. DOCUMENTS CONSIDERED TO BE RELEVANT**

| Category* | Citation of document, with indication, where appropriate, of the relevant passages | Relevant to claim No. |
|---|---|---|
| PX | CN 110674936 A (SHANGHAI CAMBRICON INFORMATION TECHNOLOGY CO., LTD.) 10 January 2020 (2020-01-10) claims 1-16 | 1-20 |
| X | CN 109993299 A (ZTE CORPORATION) 09 July 2019 (2019-07-09) description, paragraphs [0001]-[0098], and figures 3-7 | 1-20 |
| X | CN 109426553 A (SHANGHAI CAMBRICON INFORMATION TECHNOLOGY CO., LTD.) 05 March 2019 (2019-03-05) description, paragraphs [0039]-[0127] | 1-20 |
| A | CN 107862378 A (VERISILICON MICROELECTRONICS (SHANGHAI) CO., LTD. et al.) 30 March 2018 (2018-03-30) entire document | 1-20 |
| A | CN 106155635 A (BEIJING QIHOO TECHNOLOGY CO., LTD. et al.) 23 November 2016 (2016-11-23) entire document | 1-20 |
| A | US 2019138891 A1 (SAMSUNG ELECTRONICS CO., LTD.) 09 May 2019 (2019-05-09) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2020** | **24 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/116933**

| Patent document cited in search report | | | Publication date (day/month/year) | Patent family member(s) | | | Publication date (day/month/year) |
|---|---|---|---|---|---|---|---|
| CN | 110674936 | A | 10 January 2020 | None | | | |
| CN | 109993299 | A | 09 July 2019 | WO | 2019128475 | A1 | 04 July 2019 |
| | | | | EP | 3734475 | A1 | 04 November 2020 |
| | | | | US | 20200342322 | A1 | 29 October 2020 |
| CN | 109426553 | A | 05 March 2019 | US | 2020089534 | A1 | 19 March 2020 |
| | | | | WO | 2019001418 | A1 | 03 January 2019 |
| | | | | CN | 109117415 | A | 01 January 2019 |
| | | | | CN | 109214616 | A | 15 January 2019 |
| CN | 107862378 | A | 30 March 2018 | CN | 107862378 | B | 24 April 2020 |
| CN | 106155635 | A | 23 November 2016 | CN | 106155635 | B | 18 September 2020 |
| US | 2019138891 | A1 | 09 May 2019 | KR | 20190052893 | A | 17 May 2019 |

Form PCT/ISA/210 (patent family annex) (January 2015)